# EUROPEAN PATENT APPLICATION

(11) **EP 4 737 285 A1**
(43) Date of publication of application: **06.05.2026**
(21) Application number: 24877156.0
(22) Date of filing: 07.10.2024
(51) Int. Cl.: B62J 43/16, B62J 9/14, B62K 11/10

(54) **SADDLE-TYPE ELECTRIC VEHICLE**

(30) Priority: 10.10.2023 JP 2023175186
(71) Applicant: Yamaha Hatsudoki Kabushiki Kaisha, Iwata-shi, Shizuoka 438-8501 (JP)
(72) Inventor: NAGAO Tokinari, Iwata-shi, Shizuoka 438-8501 (JP); NAKAO Riki, Iwata-shi, Shizuoka 438-8501 (JP)
(74) Representative: Grünecker Patent- und Rechtsanwälte PartG mbB
(86) International application number: PCT/JP2024/035819
(87) International publication number: WO 2025/079561

(57) **Abstract**

A straddled electric vehicle 1 includes a vehicle body frame 11, a seat 21, a foot board 22, a housing box 31, an electric motor 41, and a battery 51. At least a part of the foot board 22 is disposed more forward than and lower than the seat 21. The housing box 31 is supported by the vehicle body frame 11 and is disposed below the seat 21. The electric motor 41 is disposed below the housing box 31 and overlaps the housing box 31 in vehicle plan view. The battery 51 supplies electric power to the electric motor 41. The battery 51 includes a first portion 52 and a second portion 53. The first portion 52 is disposed below the foot board 22. The second portion 53 extends upward from the first portion 52 and is disposed below the seat 21 and in front of the electric motor 41. The second portion 53 has an upper end 53t disposed higher than a lower end 31b of the housing box 31.

## Description

### Technical Field

The present invention relates to a straddled electric vehicle.

### Background Art

Patent Literature 1 discloses a straddled electric vehicle. The straddled electric vehicle is classified as a scooter-type vehicle. The straddled electric vehicle includes a seat, a foot board, and a housing box. The foot board is disposed more forward than and lower than the seat. The housing box is disposed below the seat. The housing box can house a helmet.

A straddled electric vehicle includes an electric motor, a battery, and a battery housing unit. The electric motor propels the straddled electric vehicle. The battery supplies electric power to the electric motor. The battery housing unit is disposed below the seat. The battery housing unit is disposed in front of the housing box. The battery housing unit is molded integrally with the housing box, for example. The battery housing unit houses a battery. As a result, the battery in the battery housing unit is installed below the seat. The battery in the battery housing unit is disposed in front of the housing box.

### Citation List

### Patent Literature

Patent Literature 1: JP 2022-180 187 A

### Summary of Invention

### Technical Problem

In Patent Literature 1, the battery housing unit is disposed below the seat and in front of the housing box. Therefore, the size of the battery housing unit is relatively small. Therefore, the size of the battery in the battery housing unit is relatively small. Therefore, the capacity of the battery in the battery housing unit is relatively small. In Patent Literature 1, it is difficult to mount a battery having a large capacity on a straddled electric vehicle.

The present invention has been made in view of such circumstances, and an object thereof is to provide a straddled electric vehicle on which a battery having a large capacity is mounted.

First, it has been studied to install a battery below a foot board. However, the space below the foot board is not sufficiently large. Therefore, it is difficult to install a battery having a sufficiently large size below the foot board. Thus, installing a battery having a sufficiently large capacity below the foot board is difficult.

Therefore, studies have been further conducted. The present invention is based on these studies. The above object is achieved by a straddled electric vehicle according to claim 1. The present invention is constituted as stated below.

That is, the present invention provides a straddled electric vehicle including:
a vehicle body frame;
a seat;
a foot board at least a part of which is disposed more forward than and lower than the seat;
a housing box supported by the vehicle body frame and installed below the seat;
an electric motor disposed below the housing box and overlapping the housing box in plan view of the straddled electric vehicle; and
a battery configured to supply electric power to the electric motor, in which the battery includes:
   a first portion disposed below the foot board; and
   a second portion extending upward from the first portion and disposed below the seat and in front of the electric motor, and
the second portion has an upper end disposed higher than a lower end of the housing box.

A straddled electric vehicle includes a vehicle body frame, a seat, a foot board, a housing box, an electric motor, and a battery. At least a part of the foot board is disposed more forward than and lower than the seat. The housing box is supported by the vehicle body frame. The housing box is disposed below the seat. The electric motor is disposed below the housing box. The electric motor overlaps the housing box in plan view of the straddled electric vehicle. The battery supplies electric power to the electric motor.

The battery includes a first portion and a second portion. The first portion is disposed below the foot board. The second portion extends upward from the first portion. The second portion is disposed below the seat. The second portion is disposed in front of the electric motor. Therefore, an entirety of the first portion and the second portion has a large size. Thus, the battery has a large size. Therefore, the battery has a large capacity.

Further, the housing box has a lower end. The second portion has an upper end. The upper end of the second portion is disposed higher than a lower end of the housing box. Therefore, the size of the second portion is even larger. Therefore, the size of the battery is even larger. Therefore, the capacity of the battery is even larger.

In summary, the straddled electric vehicle mounts a battery having a large capacity.

It is preferred in the above-described straddled electric vehicle that
the second portion overlaps the housing box in front view of the straddled electric vehicle.

Therefore, the size of the second portion is even larger. Therefore, the size of the battery is even larger. Therefore, the capacity of the battery is even larger.

It is preferred in the above-described straddled electric vehicle that
the battery includes:
   a plurality of first cells installed in the first portion; and
   a plurality of second cells installed in the second portion, and
the second cells include a portion disposed higher than the lower end of the housing box.

The first cells are installed in the first portion. The second cells are installed in the second portion. The capacity of the battery is the sum of the capacity of the first cells and the capacity of the second cells. Therefore, the capacity of the battery is large. Further, the second cells include a portion disposed higher than the lower end of the housing box. Therefore, the size of the second cells is even larger. Therefore, the capacity of the second cells is even larger. Therefore, the capacity of the battery is even larger.

It is preferred in the above-described straddled electric vehicle that
the upper end of the second portion is disposed higher than at least a part, preferably the entirety, of the electric motor.

Therefore, the size of the second portion is even larger. Therefore, the size of the battery is even larger. Therefore, the capacity of the battery is even larger.

It is preferred in the above-described straddled electric vehicle that
the upper end of the second portion is disposed higher than at least a part, preferably the entirety, of the foot board.

Therefore, the size of the second portion is even larger. Therefore, the size of the battery is even larger. Therefore, the capacity of the battery is even larger.

It is preferred in the above-described straddled electric vehicle that
the first portion has an upper end and a lower end, and
a length in an up-down direction of the straddled electric vehicle between the upper end of the second portion and the upper end of the first portion is larger than a length in the up-down direction of the straddled electric vehicle between the upper end of the first portion and the lower end of the first portion.

Therefore, it is easy to dispose the upper end of the second portion higher than the lower end of the housing box.

It is preferred in the above-described straddled electric vehicle that
the first portion is longer in a longitudinal direction of the straddled electric vehicle than in an up-down-direction in side view of the straddled electric vehicle, and
the second portion is longer in the up-down direction of the straddled electric vehicle than in the longitudinal direction in side view of the straddled electric vehicle.

The first portion is longer in the longitudinal direction of the straddled electric vehicle in side view of the straddled electric vehicle. Therefore, it is easy to dispose the first portion below the foot board. The second portion is longer in the up-down direction of the straddled electric vehicle in side view of the straddled electric vehicle. Therefore, it is easy to dispose the upper end of the second portion higher than the lower end of the housing box.

It is preferred in the above-described straddled electric vehicle that
the second portion is joined to a rear part of the first portion.

Therefore, it is easy to dispose the first portion below the foot board. It is easy to dispose the second portion below the seat and in front of the electric motor.

It is preferred in the above-described straddled electric vehicle that
in side view of the straddled electric vehicle, the battery has a substantially L shape.

Therefore, it is easy to dispose the first portion below the foot board. It is easy to dispose the second portion below the seat and in front of the electric motor.

It is preferred in the above-described straddled electric vehicle that
the battery has a center of gravity located lower than the lower end of the housing box.

Therefore, it is easy to lower a center of gravity of the straddled electric vehicle. Therefore, it is easy to improve the operability of the straddled electric vehicle.

It is preferred in the above-described straddled electric vehicle that
the electric motor includes a motor shaft, and
the center of gravity of the battery is located lower than the motor shaft.

Therefore, it is easier to lower the center of gravity of the straddled electric vehicle. Therefore, it is easier to improve the operability of the straddled electric vehicle.

It is preferred in the above-described straddled electric vehicle that
the foot board has an upper edge in side view of the straddled electric vehicle, and
the center of gravity of the battery is located lower than at least a part, preferably the entirety, of the upper edge of the foot board.

Therefore, it is easier to lower the center of gravity of the straddled electric vehicle. Therefore, it is easier to improve the operability of the straddled electric vehicle.

It is preferred in the above-described straddled electric vehicle that
the foot board is flat in a transverse direction of the straddled electric vehicle.

Therefore, the space below the foot board is not sufficiently large. However, the battery includes a second portion in addition to the first portion. Therefore, even if the foot board is flat in the transverse direction of the straddled electric vehicle, the size of the battery is large. Accordingly, even if the foot board is flat in the transverse direction of the straddled electric vehicle, the capacity of the battery is large. Thus, even if the foot board is flat in the transverse direction of the straddled electric vehicle, the present straddled electric vehicle mounts the battery having a large capacity. Rather, when the foot board is flat in the transverse direction of the straddled electric vehicle, the present straddled electric vehicle exhibits significant utility.

It is preferred in the above-described straddled electric vehicle that
the housing box extends from a position more rearward than the second portion to a position above the second portion.

Thus, the housing box has a relatively large size.

It is preferred in the above-described straddled electric vehicle that
the housing box includes:
   a rear part disposed more rearward than the second portion; and
   a front part disposed in front of the rear part and disposed above the second portion,
at least a part of the rear part is disposed lower than the upper end of the second portion, and
the entire front part is disposed higher than the upper end of the second portion.

The housing box includes a rear part and a front part. The rear part is disposed more rearward than the second portion. The front part is disposed in front of the rear part. The front part is disposed above the second portion. At least a part of the rear part is disposed lower than the upper end of the second portion. Therefore, the rear part has a relatively large size. The entire front part is disposed higher than the upper end of the second portion. Therefore, the front part does not interfere with the second portion. Therefore, it is easy to extend the housing box from the position more rearward than the second portion to the position above the second portion.

It is preferred in the above-described straddled electric vehicle that,
the foot board includes,
a right portion,
a left portion disposed leftward of the right portion, and
a central portion disposed leftward of the right portion and rightward of the left portion,
the right portion has an upper edge in side view of the straddled electric vehicle,
the left portion has an upper edge in side view of the straddled electric vehicle,
the first portion is disposed below the upper edge of the right portion in side view of the straddled electric vehicle, and
the first portion is disposed below the upper edge of the left portion in side view of the straddled electric vehicle.

Therefore, it is easy to dispose the first portion below the foot board.

It is preferred in the above-described straddled electric vehicle that,
the seat has a front end,
at least a part of the first portion is disposed more forward than the front end of the seat, and
at least a part of the second portion is disposed more rearward than the front end of the seat.

At least a part of the first portion is disposed more forward than the front end of the seat. As described above, the first portion is disposed below the foot board. Here, the battery is a relatively heavy part. Thus, the first portion is relatively heavy, and at least a part of the first portion is disposed more forward than the front end of the seat and below the foot board. Therefore, it is easy to improve the comfort of the straddled electric vehicle. For example, it is easy to improve the stability of the straddled electric vehicle. At least a part of the second portion is disposed more rearward than the front end of the seat. As described above, the second portion extends upward from the first portion. Therefore, at least a part of the second portion is disposed at a position close to the body of the driver of the straddled electric vehicle. Here, the battery is a relatively heavy part. Therefore, the second portion is relatively heavy, and at least a part of the second portion is disposed more rearward than the front end of the seat and extends upward from the first portion. In other words, the second portion is relatively heavy, and at least a part of the second portion is disposed at a position close to the driver. Therefore, it is easy to improve the comfort of the straddled electric vehicle. For example, it is easy to improve the drivability of the straddled electric vehicle.

It is preferred in the above-described straddled electric vehicle that,
at least a part of the first portion overlaps the foot board in plan view of the straddled electric vehicle, and
at least a part of the second portion overlaps the seat in plan view of the straddled electric vehicle.

At least a part of the first portion overlaps the foot board in plan view of the straddled electric vehicle. Therefore, it is easy to dispose the first portion below the foot board. At least a part of the second portion overlaps the seat in plan view of the straddled electric vehicle. Therefore, it is easy to dispose the second portion below the seat.

### Advantageous Effects of Invention

The present straddled electric vehicle mounts a battery having a large capacity.

### BRIEF DESCRIPTION OF DRAWINGS

For the purpose of illustrating the invention, there are shown in the drawings several forms which are presently preferred, it being understood, however, that the invention is not limited to the precise arrangement and instrumentalities shown.
Fig. 1 is a left side view of a straddled electric vehicle according to an embodiment;
Fig. 2 is a left side view of a part of the straddled electric vehicle;
Fig. 3 is a plan view of a part of the straddled electric vehicle;
Fig. 4 is a cross-sectional view taken along line IV-IV of Fig. 3;
Fig. 5 is a cross-sectional view of the housing box;
Fig. 6 is a left side view of the battery;
Fig. 7 is a perspective view of the battery;
Fig. 8 is a front view of the housing box and the battery;
Fig. 9 is a rear view of the electric motor and the battery; and
Fig. 10 is a perspective view of a battery according to a modification.

### Description of Embodiments

Hereinafter, a straddled electric vehicle 1 according to the present invention will be described with reference to the drawings.

### 1. Schematic Configuration of Straddled Electric Vehicle 1

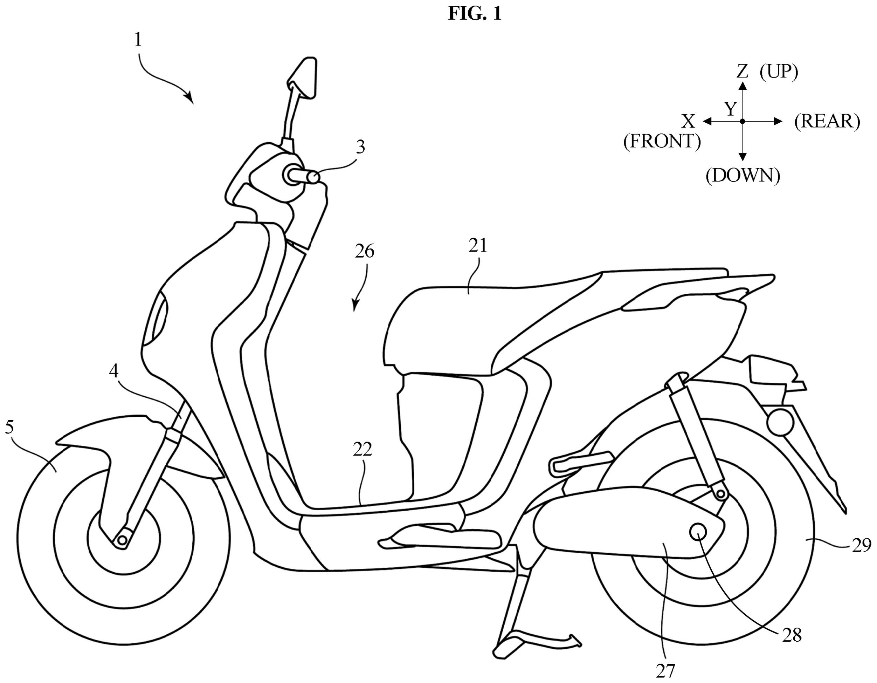

Fig. 1 is a left side view of a straddled electric vehicle 1 according to an embodiment. A schematic configuration of the straddled electric vehicle 1 will be described. The straddled electric vehicle 1 is classified as a scooter-type vehicle, for example.

Fig. 1 shows a longitudinal direction X, a transverse direction Y, and an up-down direction Z of the straddled electric vehicle 1. The longitudinal direction X, transverse direction Y, and up-down direction Z are defined with reference to a driver (also called a rider) riding the straddled electric vehicle 1. The longitudinal direction X, transverse direction Y, and up-down direction Z are perpendicular to one another. The longitudinal direction X and transverse direction Y are horizontal. The up-down direction Z is vertical.

The terms "forward", "rearward", "upward", "downward", "rightward", and "leftward", respectively, mean "forward", "rearward", "upward", "downward", "rightward", and "leftward" as seen from the driver mounted on the straddled electric vehicle 1. Unless otherwise stated in this specification, "forward" and "rearward" include not only directions parallel to the longitudinal direction X but also directions close to the longitudinal direction X. The directions close to the longitudinal direction X are, for example, directions at angles not exceeding 45 degrees to the longitudinal direction X. Similarly, unless otherwise specified, "rightward" and "leftward" include not only directions parallel to the transverse direction Y but also directions close to the transverse direction Y. Unless otherwise specified, "upward" and "downward" include not only directions parallel to the up-down direction Z but also directions close to the up-down direction Z. For reference, the drawings show the terms FRONT, REAR, UP, DOWN, RIGHT, and LEFT, as appropriate. "More forward", "more rearward", "higher", "lower", etc. may not necessarily require an overlap in the respective direction, while "in front", "behind", "above", "below" may require an overlap in the respective direction.

In the present specification, "in side view of the straddled electric vehicle 1" is appropriately referred to as "in vehicle side view". "In plan view of the straddled electric vehicle 1" is appropriately referred to as "in vehicle plan view". "In front view of the straddled electric vehicle 1" is appropriately referred to as "in vehicle front view". "In rear view of the straddled electric vehicle 1" is appropriately referred to as "in vehicle rear view".

The straddled electric vehicle 1 includes a handlebar 3, a front fork 4, and a front wheel 5. The front fork 4 is coupled to the handlebar 3. The front fork 4 extends downward and forward from the handlebar 3. The front wheel 5 is supported by a lower part of the front fork 4. A driver grips the handlebar 3 with the driver's hands.

The straddled electric vehicle 1 includes a seat 21. The seat 21 is disposed more rearward than the handlebar 3. The entire seat 21 is disposed more rearward than the entire handlebar 3. The driver sits on the seat 21.

The straddled electric vehicle 1 includes a foot board 22. The foot board 22 is disposed more rearward than the handlebar 3. The foot board 22 is disposed lower than the handlebar 3. The foot board 22 is disposed more forward than the seat 21. The foot board 22 is disposed lower than the seat 21. The driver places his or her feet on the foot board 22.

The straddled electric vehicle 1 forms a recessed space 26. The recessed space 26 is an unoccupied space. The straddled electric vehicle 1 does not have a part existing in the recessed space 26. The recessed space 26 is located behind the handlebar 3. The recessed space 26 is located in front of the seat 21. The recessed space 26 is located above the foot board 22. The recessed space 26 is opened upward. The recessed space 26 extends downward. The recessed space 26 is recessed downward. The recessed space 26 extends to the same height position as the foot board 22. The recessed space 26 is in contact with the foot board 22. The recessed space 26 allows the driver to easily get on and off the straddled electric vehicle 1. For example, the driver easily gets on and off the straddled electric vehicle 1 by passing the driver's legs through the recessed space 26.

The straddled electric vehicle 1 includes a swing arm 27, a rear axle 28, and a rear wheel 29. The swing arm 27 is disposed below the seat 21. The swing arm 27 extends rearward. The rear axle 28 is supported by a rear part of the swing arm 27. The rear axle 28 extends in the transverse direction Y. The rear wheel 29 is supported by the rear axle 28. The rear wheel 29 rotates about the rear axle 28.

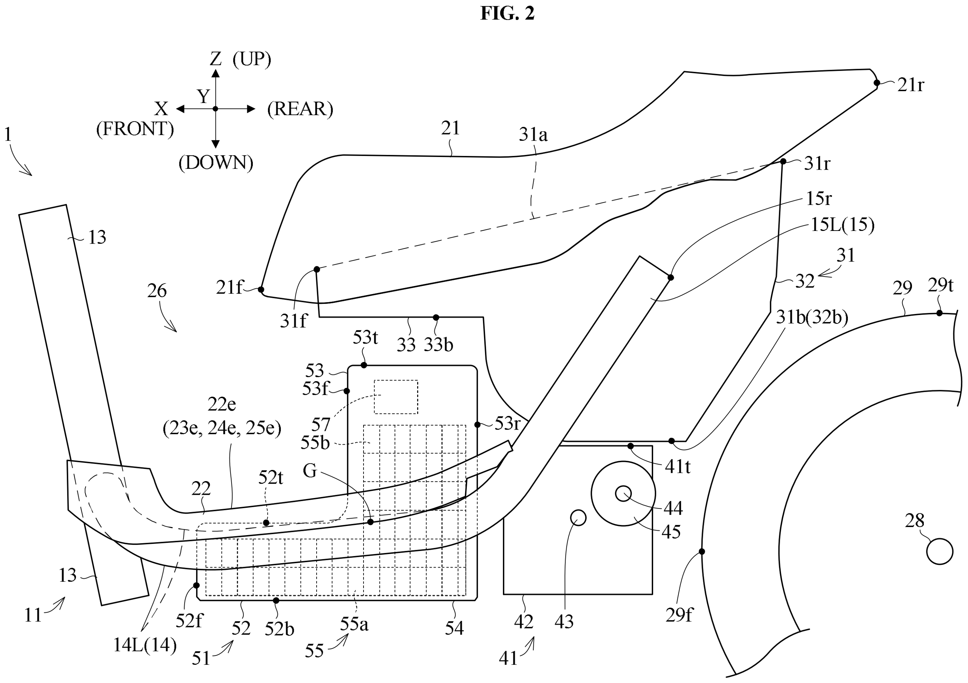

Fig. 2 is a left side view of a part of the straddled electric vehicle 1. The straddled electric vehicle 1 includes a vehicle body frame 11 and a housing box 31. The housing box 31 is supported by the vehicle body frame 11. The housing box 31 is disposed below the seat 21.

The straddled electric vehicle 1 includes an electric motor 41. The electric motor 41 is disposed below the housing box 31. The electric motor 41 propels the straddled electric vehicle 1. The electric motor 41 converts the electric energy into mechanical energy for propulsion of the straddled electric vehicle 1. The electric motor 41 generates power for rotating the rear wheels 29.

The straddled electric vehicle 1 includes a battery 51. The battery 51 stores electric energy. The battery 51 is, for example, a rechargeable secondary battery. The battery 51 is, for example, a lithium ion battery. The battery 51 provides electric energy to the electric motor 41. The battery 51 supplies electric power to the electric motor 41.

The battery 51 is mounted on the straddled electric vehicle 1.

The battery 51 is a relatively heavy part.

Although not illustrated, the battery 51 is disposed more rearward than the handlebar 3. At least a part of the battery 51 is disposed more rearward than the entire handlebar 3. The battery 51 is disposed lower than the handlebar 3. For example, the entire battery 51 is disposed lower than the entire handlebar 3.

The battery 51 has a first portion 52. The first portion 52 is disposed below the foot board 22. The first portion 52 is disposed in front of the electric motor 41.

At least a part of the first portion 52 is disposed lower than the foot board 22. For example, the entire first portion 52 is disposed lower than the foot board 22.

At least a part of the first portion 52 is disposed below the foot board 22. For example, the entire first portion 52 is disposed below the foot board 22.

The battery 51 has a second portion 53. The second portion 53 extends upward from the first portion 52. The second portion 53 is disposed below the seat 21. The second portion 53 is disposed in front of the electric motor 41.

At least a part of the second portion 53 is disposed lower than the seat 21. For example, the entire second portion 53 is disposed lower than the seat 21.

At least a part of the second portion 53 is disposed below the seat 21. For example, the entire second portion 53 is disposed below the seat 21.

The housing box 31 has a lower end 31b. The second portion 53 has an upper end 53t. The upper end 53t is disposed higher than the lower end 31b.

### 2. Vehicle Body Frame 11

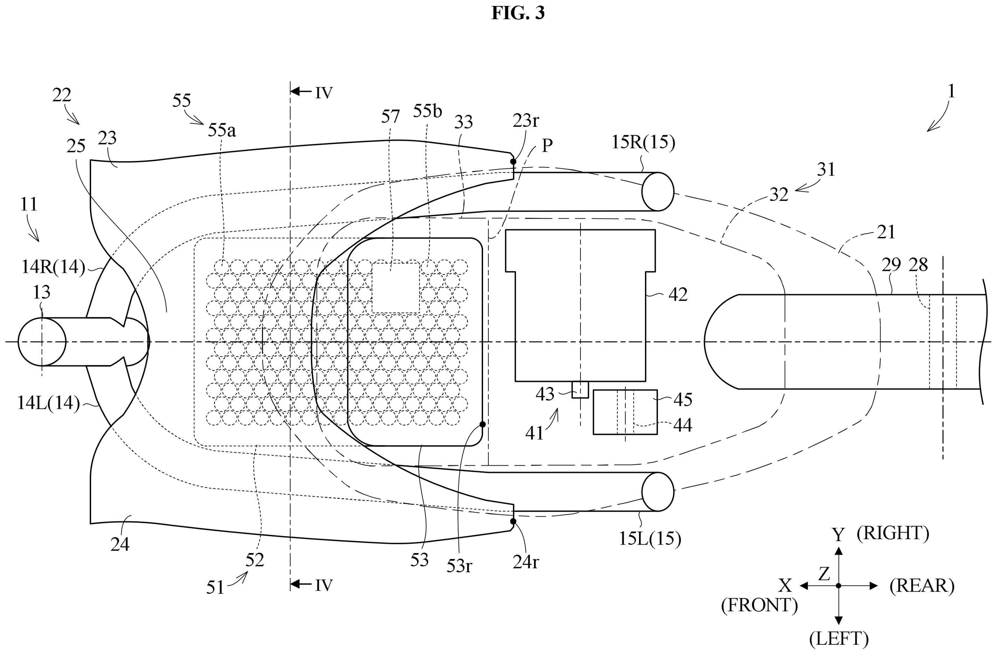

Referring to Figs. 2 and 3. Fig. 3 is a plan view of a part of the straddled electric vehicle 1. In Fig. 3, the seat 21 and the housing box 31 are indicated by two-dot chain lines.

The vehicle body frame 11 includes a down frame 13, a right lower frame 14R, and a left lower frame 14L. The down frame 13 extends in the up-down direction Z. The right lower frame 14R and the left lower frame 14L are connected to the down frame 13. The right lower frame 14R and the left lower frame 14L extend rearward from the down frame 13. The left lower frame 14L is disposed leftward of the right lower frame 14R. The left lower frame 14L overlaps the right lower frame 14R in vehicle side view.

The vehicle body frame 11 includes a right seat frame 15R and a left seat frame 15L. The right seat frame 15R is connected to the right lower frame 14R. The right seat frame 15R extends rearward and upward from the right lower frame 14R. The left seat frame 15L is connected to the left lower frame 14L. The left seat frame 15L extends rearward and upward from the left lower frame 14L. The left seat frame 15L is disposed leftward of the right seat frame 15R. The left seat frame 15L overlaps the right seat frame 15R in vehicle side view.

When the right lower frame 14R and the left lower frame 14L are not distinguished from each other, they are referred to as a "lower frame 14". When the right seat frame 15R and the left seat frame 15L are not distinguished from each other, they are referred to as a "seat frame 15".

The vehicle body frame 11 supports the foot board 22. For example, the lower frame 14 supports the foot board 22. The foot board 22 is fixed to the vehicle body frame 11.

Although not illustrated, the vehicle body frame 11 supports the front part of the swing arm 27. For example, the seat frame 15 supports the front part of the swing arm 27. The swing arm 27 swings with respect to the vehicle body frame 11. The rear part of the swing arm 27 moves in the up-down direction Z with respect to the vehicle body frame 11. The rear wheel 29 moves in the up-down direction Z with respect to the vehicle body frame 11.

The vehicle body frame 11 supports the housing box 31. For example, the seat frame 15 supports the housing box 31. The housing box 31 is fixed to the vehicle body frame 11.

For example, the housing box 31 supports the seat 21. The vehicle body frame 11 supports the seat 21 via the housing box 31.

The vehicle body frame 11 supports the electric motor 41. For example, the seat frame 15 supports the electric motor 41. The electric motor 41 is fixed to the vehicle body frame 11. The electric motor 41 is not swingable with respect to the vehicle body frame 11.

The vehicle body frame 11 supports the battery 51. For example, the lower frame 14 supports the battery 51. The battery 51 is fixed to the vehicle body frame 11. The battery 51 is not swingable with respect to the vehicle body frame 11.

### 3. Foot Board 22

Refer to Fig. 2. The foot board 22 has an upper edge 22e in vehicle side view. The upper edge 22e is also referred to as a "foot board line". The upper edge 22e is substantially parallel to a horizontal direction in vehicle side view. The upper edge 22e extends in the longitudinal direction X in vehicle side view. For example, the upper edge 22e extends rearward and upward in vehicle side view. For example, the upper edge 22e extends linearly in vehicle side view. Alternatively, the upper edge 22e may be curved in vehicle side view. Alternatively, the upper edge 22e may include a portion that extends linearly and a portion that is curved in vehicle side view.

The recessed space 26 is located above the upper edge 22e in vehicle side view. The recessed space 26 extends to the same height position as the upper edge 22e. The recessed space 26 is in contact with the upper edge 22e of the foot board 22 in vehicle side view.

Refer to Fig. 3. The foot board 22 is wide. The foot board 22 is sufficiently large that the right foot and the left foot of the driver can be placed on the foot board 22.

The foot board 22 extends in the transverse direction Y. The foot board 22 is long in the transverse direction Y. The foot board 22 is sufficiently long in the transverse direction Y that the right foot and the left foot of the driver can be placed on the foot board 22.

The foot board 22 is flat in the transverse direction Y. The foot board 22 is classified into a so-called flat foot board. The foot board 22 does not include a so-called center tunnel. Therefore, it is easier for the driver to pass the legs of the driver through the recessed space 26.

The foot board 22 has a right portion 23, a left portion 24, and a central portion 25. The left portion 24 is disposed leftward of the right portion 23. The central portion 25 is disposed leftward of the right portion 23 and rightward of the left portion 24. The foot board 22 extends from the right portion 23 to the left portion 24 through the central portion 25.

The central portion 25 is joined to the right portion 23. The central portion 25 is joined to the left portion 24. For example, the right portion 23, the left portion 24, and the central portion 25 are integrally molded.

For example, the driver places the driver's right foot on the right portion 23. The driver places the driver's left foot on the left portion 24.

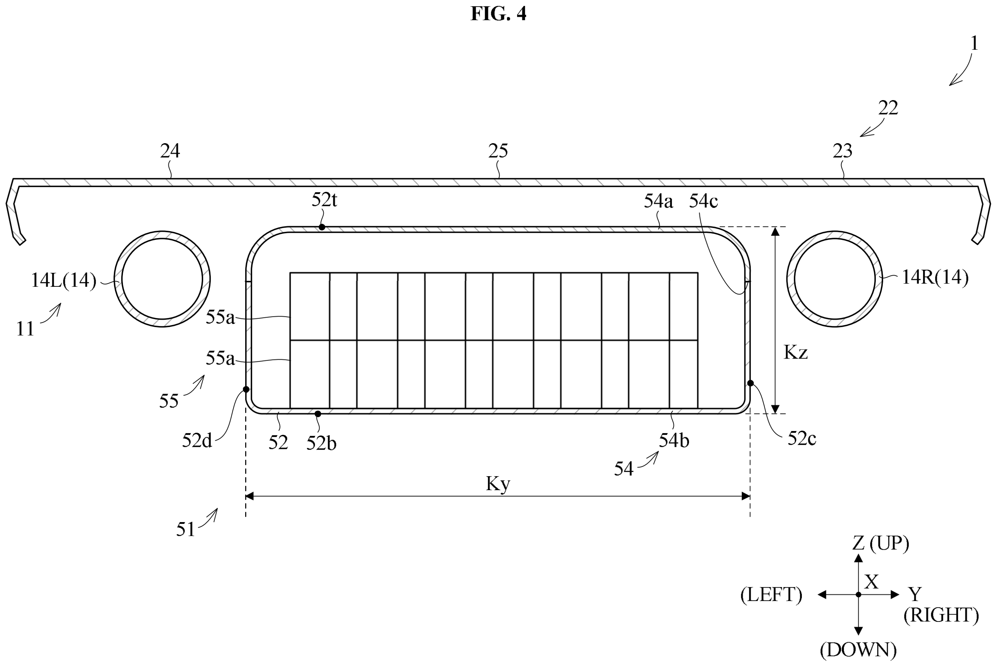

Fig. 4 is a cross-sectional view taken along line IV-IV of Fig. 3. The central portion 25 is at substantially the same height position as the right portion 23. The central portion 25 does not protrude upward with respect to the right portion 23. The central portion 25 is at substantially the same height position as the left portion 24. The central portion 25 does not protrude upward with respect to the left portion 24. Therefore, when the driver passes the legs of the driver through the recessed space 26, the central portion 25 does not interfere with the legs of the driver. When the driver passes the legs of the driver through the recessed space 26, the legs of the driver do not hit the central portion 25.

The right portion 23 has an upper edge 23e in vehicle side view. The left portion 24 has an upper edge 24e in vehicle side view. The central portion 25 has an upper edge 25e in vehicle side view. The upper edge 24e is at the same height position as the upper edge 23e in vehicle side view. The upper edge 25e is at the same height position as the upper edge 23e in vehicle side view. The upper edge 25e is at the same height position as the upper edge 24e in vehicle side view. The upper edge 23e corresponds to the above-described upper edge 22e in vehicle side view. The upper edge 24e also corresponds to the above-described upper edge 22e in vehicle side view. The upper edge 25e also corresponds to the above-described upper edge 22e in vehicle side view.

Refer to Fig. 3. The right portion 23 extends in the longitudinal direction X. The right portion 23 extends to a position more rearward than the central portion 25. The right portion 23 extends to a position more rearward than the entire central portion 25.

The right portion 23 has a rear end 23r. The rear end 23r is located more rearward than the central portion 25. The rear end 23r is located more rearward than the entire central portion 25.

The left portion 24 extends in the longitudinal direction X. The left portion 24 extends to a position more rearward than the central portion 25. The left portion 24 extends to a position more rearward than the entire central portion 25.

The left portion 24 has a rear end 24r. The rear end 24r is located more rearward than the central portion 25. The rear end 24r is located more rearward than the entire central portion 25.

### 4. Housing Box 31

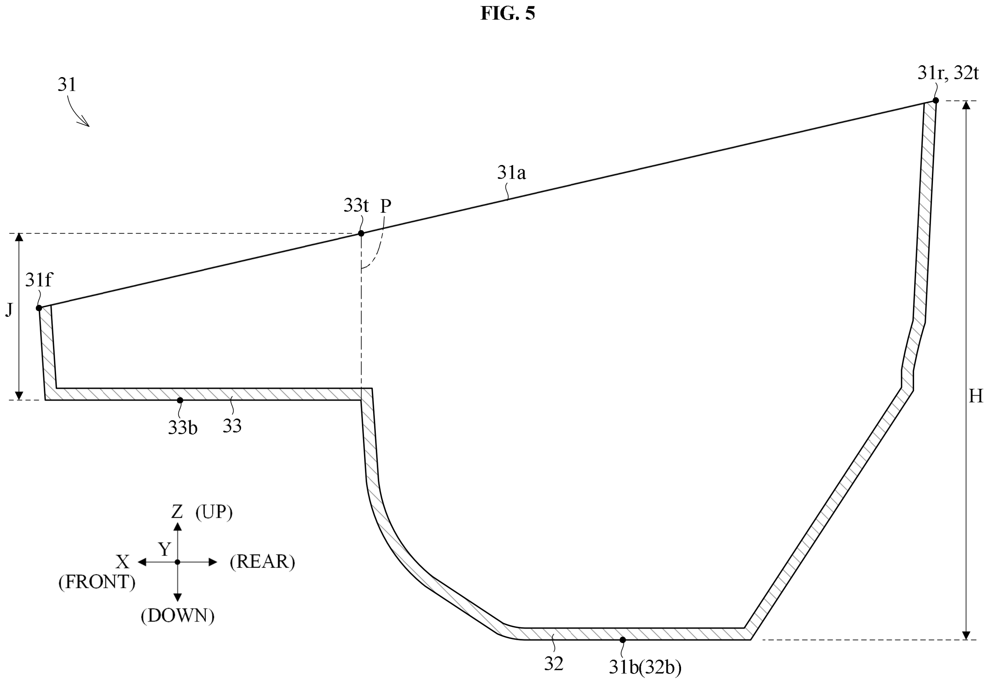

Fig. 5 is a cross-sectional view of the housing box 31. The cross section of Fig. 5 is perpendicular to the transverse direction Y. The cross section of Fig. 5 passes through the center of the housing box 31. The housing box 31 has a box shape. The housing box 31 houses luggage. The luggage is, for example, a helmet.

The housing box 31 is opened upward. The housing box 31 has an opening 31a. The opening 31a is disposed higher than the lower end 31b. The opening 31a is disposed at an upper portion of the housing box 31. The housing box 31 is opened through the opening 31a.

The housing box 31 includes a rear part 32 and a front part 33. The front part 33 is disposed in front of the rear part 32. The front part 33 extends forward from the rear part 32.

Fig. 5 illustrates a virtual plane P by an alternate long and short dash line. The virtual plane P is an example of a boundary between the rear part 32 and the front part 33. The virtual plane P is, for example, a plane perpendicular to the longitudinal direction X.

The front part 33 is connected to the rear part 32. The front part 33 is joined to the rear part 32. The front part 33 is not away from the rear part 32. The rear part 32 and the front part 33 are integrated. The rear part 32 and the front part 33 are inseparable from each other.

The rear part 32 is larger than the front part 33. The front part 33 is smaller than the rear part 32. The rear part 32 houses, for example, a helmet.

The rear part 32 extends to a position lower than the front part 33. The rear part 32 has a lower end 32b. The front part 33 has a lower end 33b. The lower end 32b is lower than the lower end 33b.

The lower end 32b corresponds to, for example, the lower end 31b of the housing box 31. The lower end 32b is disposed lower than the opening 31a. The lower end 33b is disposed lower than the opening 31a.

The rear part 32 is deeper than the front part 33. The front part 33 is shallower than the rear part 32.

Fig. 5 illustrates length H and length J. The length H is the length of the rear part 32 in the up-down direction Z. The rear part 32 has an upper end 32t. The length H is a length in the up-down direction Z between the lower end 32b and the upper end 32t. The length J is the length of the front part 33 in the up-down direction Z. The front part 33 has an upper end 33t. The length J is a length in the up-down direction Z between the lower end 33b and the upper end 33t. The length H is larger than the length J. The length H is, for example, three times or more of the length J.

### 5. Electric Motor 41

Refer to Fig. 2. The electric motor 41 includes a motor body 42 and a motor shaft 43. The motor body 42 is fixed to the vehicle body frame 11. The motor shaft 43 is coupled to the motor body 42. The motor body 42 outputs power to the motor shaft 43. When the motor body 42 outputs power to the motor shaft 43, the motor shaft 43 rotates with respect to the motor body 42.

The straddled electric vehicle 1 includes a drive shaft 44. The drive shaft 44 is coupled to the electric motor 41. The drive shaft 44 is coupled to the rear wheel 29. When the motor shaft 43 rotates, the drive shaft 44 rotates. When the drive shaft 44 rotates, the rear wheel 29 rotates. When the rear wheel 29 rotates, the straddled electric vehicle 1 moves forward. Power is transmitted from the electric motor 41 to the rear wheel 29 via the drive shaft 44.

For example, the drive shaft 44 is coupled to the motor shaft 43. The drive shaft 44 is coupled to the motor shaft 43 via a gear mechanism (not illustrated). The drive shaft 44 is coupled to the rear wheel 29 via a chain (not illustrated).

The straddled electric vehicle 1 includes a drive sprocket 45. The drive sprocket 45 is attached to the drive shaft 44. The drive sprocket 45 is fixed to the drive shaft 44. The drive sprocket 45 rotates about the drive shaft 44. The drive sprocket 45 rotates integrally with the drive shaft 44. The chain is wound around the drive sprocket 45.

The drive shaft 44 overlaps the electric motor 41 in vehicle side view. The drive shaft 44 overlaps the motor body 42 in vehicle side view. The drive shaft 44 does not overlap the motor shaft 43 in vehicle side view.

For example, the drive shaft 44 is disposed higher than the motor shaft 43. The entire drive shaft 44 is disposed higher than the entire motor shaft 43. The drive shaft 44 is disposed more rearward than the motor shaft 43. The entire drive shaft 44 is disposed more rearward than the entire motor shaft 43.

For example, the drive sprocket 45 overlaps the electric motor 41 in vehicle side view. The drive sprocket 45 overlaps the motor body 42 in vehicle side view. The drive sprocket 45 does not overlap the motor shaft 43 in vehicle side view.

For example, the drive sprocket 45 is disposed higher than the motor shaft 43. At least a part of the drive sprocket 45 is disposed higher than the entire motor shaft 43. The drive sprocket 45 is disposed more rearward than the motor shaft 43. At least a part of the drive sprocket 45 is disposed more rearward than the entire motor shaft 43.

Refer to Fig. 3. The motor shaft 43 extends in the transverse direction Y.

For example, the motor shaft 43 is disposed leftward of the motor body 42. The motor shaft 43 extends leftward from the motor body 42.

The drive shaft 44 extends in the transverse direction Y.

For example, the drive shaft 44 is disposed leftward of the electric motor 41. At least a part of the drive shaft 44 is disposed more leftward than the entire electric motor 41.

For example, the drive shaft 44 is disposed leftward of the motor body 42. The entire drive shaft 44 is disposed more leftward than the entire motor body 42.

For example, the drive shaft 44 is disposed leftward of the motor shaft 43. At least a part of the drive shaft 44 is disposed more leftward than the entire motor shaft 43.

For example, the drive sprocket 45 is disposed leftward of the electric motor 41. At least a part of the drive sprocket 45 is disposed more leftward than the entire electric motor 41.

For example, the drive sprocket 45 is disposed leftward of the motor body 42. The entire drive sprocket 45 is disposed more leftward than the entire motor body 42.

For example, the drive sprocket 45 is disposed leftward of the motor shaft 43. At least a part of the drive sprocket 45 is disposed more leftward than the entire motor shaft 43.

### 6. Battery 51

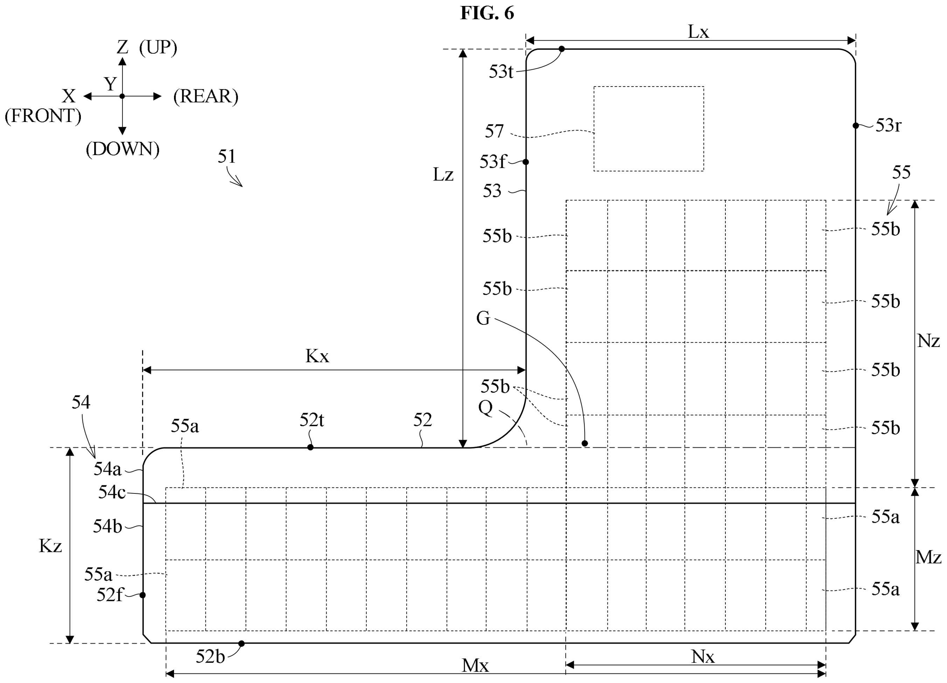

Fig. 6 is a left side view of the battery 51. The second portion 53 is connected to the first portion 52. The second portion 53 is joined to the first portion 52. The second portion 53 is not separated from the first portion 52. The first portion 52 and the second portion 53 are one block.

Fig. 6 illustrates a virtual plane Q by an alternate long and short dash line. The virtual plane Q is an example of a boundary between the first portion 52 and the second portion 53. For example, the virtual plane Q is substantially horizontal.

The first portion 52 is disposed in front of the second portion 53. The first portion 52 is disposed more forward than the second portion 53. At least a part of the first portion 52 is disposed more forward than the entire second portion 53.

The second portion 53 is disposed above the first portion 52. The second portion 53 is disposed higher than the first portion 52. At least a part of the second portion 53 is disposed higher than the entire first portion 52.

The first portion 52 extends in the longitudinal direction X in vehicle side view. The second portion 53 extends in the up-down direction Z in vehicle side view.

The first portion 52 extends forward from the second portion 53. The second portion 53 extends upward from the first portion 52.

The first portion 52 is joined to a lower portion of the second portion 53. The first portion 52 extends forward from the lower portion of the second portion 53.

The second portion 53 is joined to a rear part of the first portion 52. The second portion 53 extends upward from the rear part of the first portion 52.

The battery 51 has a substantially L shape in vehicle side view.

The first portion 52 has a front end 52f. The first portion 52 has a lower end 52b. The first portion 52 has an upper end 52t. The upper end 52t is disposed higher than the lower end 52b. For example, the upper end 52t is located at substantially the same height position as the virtual plane Q.

The second portion 53 has a front end 53f. The front end 53f is disposed more rearward than the front end 52f. The second portion 53 has a rear end 53r. The rear end 53r is disposed more rearward than the front end 52f. The rear end 53r is disposed more rearward than the front end 53f. The second portion 53 has the upper end 53t described above. The upper end 53t is disposed higher than the lower end 52b. The upper end 53t is disposed higher than the upper end 52t.

The first portion 52 is long in the longitudinal direction X in vehicle side view.

Fig. 6 illustrates a length Kx and a length Kz. The length Kx is a length in the longitudinal direction X between the front end 52f and the front end 53f. The length Kz is a length in the up-down direction Z between the lower end 52b and the upper end 52t. The length Kx is longer than the length Kz.

The second portion 53 is long in the up-down direction Z in vehicle side view.

Fig. 6 illustrates the length Lx and the length Lz. The length Lx is a length in the longitudinal direction X between the front end 53f and the rear end 53r. The length Lz is a length in the up-down direction Z between the upper end 53t and the upper end 52t. The length Lz is longer than the length Lx.

The length Lz is larger than the length Kz. For example, the length Lz is twice or more of the length Kz.

Refer to Fig. 4. The first portion 52 extends in the transverse direction Y. The first portion 52 has a right end 52c and a left end 52d. The left end 52d is disposed more leftward than the right end 52c. The first portion 52 extends from the right end 52c to the left end 52d.

The first portion 52 is flat in the transverse direction Y.

The first portion 52 is long in the transverse direction Y.

Fig. 4 illustrates a length Ky in addition to the length Kz. The length Ky is a length in the transverse direction Y between the right end 52c and the left end 52d. The length Ky corresponds to the length of the first portion 52 in the transverse direction Y. The length Kz corresponds to the length of the first portion 52 in the up-down direction Z. The length Ky is longer than the length Kz. For example, the length Ky is twice or more of the length Kz.

Referring to Figs. 4 and 6. The battery 51 includes a housing 54. The housing 54 forms one internal space in the housing 54. The interior space is substantially sealed.

The housing 54 includes a first housing 54a and a second housing 54b. The first housing 54a and the second housing 54b are connected to each other. The first housing 54a and the second housing 54b can be separated from each other.

For example, the second housing 54b is disposed below the first housing 54a.

The housing 54 includes a joint surface 54c. The first housing 54a and the second housing 54b are joined to each other at the joint surface 54c. The joint surface 54c is a boundary between the first housing 54a and the second housing 54b. For example, the joint surface 54c is substantially horizontal, for example.

Refer to Fig. 6. The joint surface 54c is disposed at a position different from the virtual plane Q. The joint surface 54c is disposed lower than the virtual plane Q.

The battery 51 includes a plurality of first cells 55a and a plurality of second cells 55b. The first cells 55a are installed in the first portion 52. The second cells 55b are installed in the second portion 53. In the present specification, cells installed across the first portion 52 and the second portion 53 is classified as "second cells 55b".

The second cells 55b are disposed above the first cells 55a. The second cells 55b are disposed higher than the first cells 55a. The entire second cells 55b are disposed higher than the entire first cells 55a.

The first cells 55a are disposed lower than the upper end 52t. The first cells 55a are disposed higher than the lower end 52b. The first cells 55a are disposed more rearward than the front end 52f. The first cells 55a are disposed more forward than the rear end 53r.

The second cells 55b are disposed lower than the upper end 53t. The second cells 55b are disposed higher than the upper end 52t. The second cells 55b are disposed more rearward than the front end 53f. The second cells 55b are disposed more forward than the rear end 53r.

Fig. 6 illustrates lengths Mz and Nz. The length Mz is an entire length of the first cells 55a in the up-down direction Z. The length Nz is an entire length of the second cells 55b in the up-down direction Z. The length Nz is longer than the length Mz. For example, the length Nz is 1.5 times or more of the length Mz. The length Nz is twice or more of the length Mz.

Fig. 6 illustrates lengths Mx and Nx. The length Mx is an entire length of the first cells 55a in the longitudinal direction X. The length Nx is an entire length of the second cells 55b in the longitudinal direction X. The length Mx is longer than the length Nx. For example, the length Mx is 1.5 times or more of the length Nx. The length Mx is twice or more of the length Nx.

The first cells 55a and the second cells 55b are installed in the housing 54. The first cells 55a and the second cells 55b are installed in an internal space of the housing 54. The housing 54 houses the first cells 55a and the second cells 55b. In Fig. 6, the first cells 55a and the second cells 55b are indicated by broken lines.

When the first cells 55a and the second cells 55b are not distinguished from each other, they are simply referred to as "cells 55".

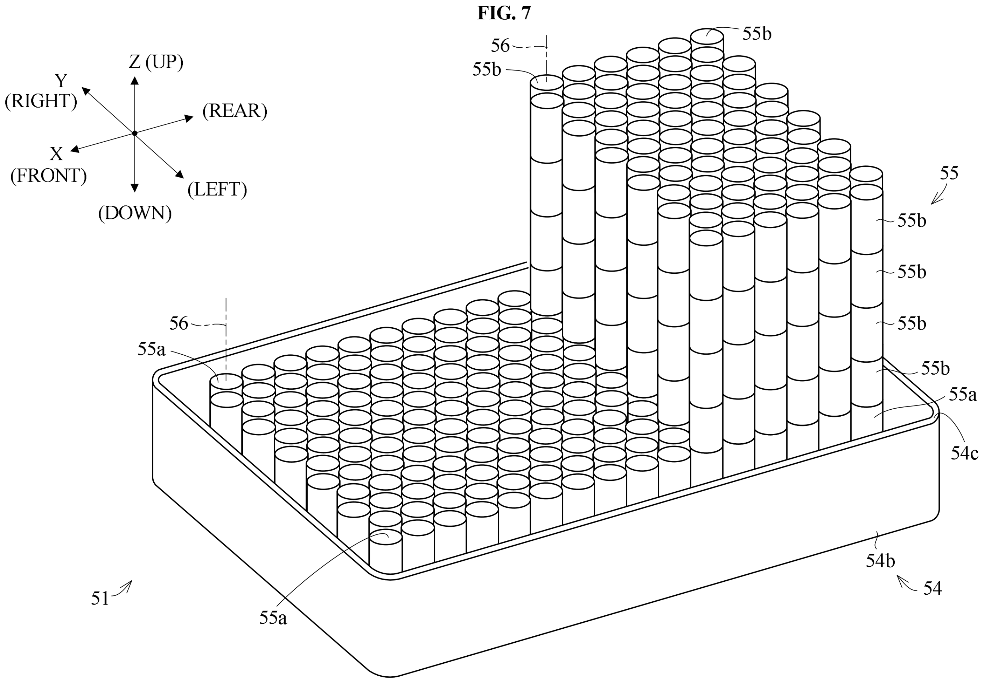

Fig. 7 is a perspective view of the battery 51. Each cell 55 has an elongated shape. Each cell 55 has an axis 56. The axis 56 is a virtual straight line. Each cell 55 is elongated along axis 56. Each cell 55 has, for example, a cylindrical shape centered on the axis 56.

The axes 56 of the first cells 55a are parallel to each other. The axes 56 of the second cells 55b are parallel to each other. The axis 56 of the first cells 55a is parallel to the axis 56 of the second cells 55b.

The attitude of the first cells 55a will be described. The first cells 55a are installed in a vertical attitude. For example, each axis 56 of the first cells 55a extends in the up-down direction Z. Each first cell 55a is installed such that the axis 56 extends in the up-down direction Z.

The attitude of the second cells 55b will be described. The attitude of the second cells 55b is common to the attitude of the first cells 55a. The second cells 55b are installed in a vertical attitude. For example, each axis 56 of the second cells 55b extends in the up-down direction Z. Each of the second cells 55b is installed such that the axis 56 extends in the up-down direction Z.

The arrangement of the plurality of first cells 55a will be described. The first cells 55a are disposed in a matrix. The first cells 55a are arranged in the longitudinal direction X, the transverse direction Y, and the up-down direction Z. For example, the first cells 55a are arranged in sixteen columns in the longitudinal direction X. The first cells 55a are arranged in twelve columns in the transverse direction Y. The first cells 55a are arranged in two columns in the up-down direction Z.

The arrangement of the plurality of second cells 55b will be described. The second cells 55b are arranged in the longitudinal direction X, the transverse direction Y, and the up-down direction Z. For example, the second cells 55b are arranged in six columns in the longitudinal direction X. The second cells 55b are arranged in twelve columns in the transverse direction Y. The second cells 55b are arranged in four columns in the up-down direction Z.

Refer to Fig. 6. The battery 51 includes an electric component 57. The electric component 57 controls charging and discharging of the battery 51. The electric component 57 includes, for example, a controller of the battery 51. The electric component 57 includes, for example, a relay and a fuse.

The electric component 57 is installed, for example, in the second portion 53. The electric component 57 is installed above the second cells 55b. The electric component 57 is installed higher than the second cells 55b. For example, the entire electric component 57 is installed higher than the entire second cells 55b.

The electric component 57 is installed in the housing 54. The electric component 57 is installed in the internal space of the housing 54. The housing 54 houses the electric component 57. In Fig. 6, the electric component 57 is indicated by a broken line.

Fig. 6 illustrates the position of the center of gravity G of the battery 51. The center of gravity G overlaps the battery 51 in vehicle side view. The center of gravity G overlaps the housing 54 in vehicle side view.

For example, the center of gravity G is located near the boundary between the first portion 52 and the second portion 53. The center of gravity G is located near the virtual plane Q. The center of gravity G is located slightly higher than the virtual plane Q. The center of gravity G is located above the first portion 52. The center of gravity G is located higher than the first portion 52. The center of gravity G is located higher than the entire first portion 52. The center of gravity G overlaps the second portion 53 in vehicle side view.

For example, the center of gravity G is located lower than the upper end 53t. The center of gravity G is located higher than the lower end 52b. The center of gravity G is located at substantially the same height position as the upper end 52t. The center of gravity G is located slightly higher than the upper end 52t. The center of gravity G is located more rearward than the front end 52f. The center of gravity G is located more rearward than the front end 53f. The center of gravity G is located more forward than the rear end 53r.

The center of gravity G is located above the first cells 55a. The center of gravity G is located higher than the entire first cells 55a. The center of gravity G is disposed at substantially the same height position as the second cells 55b. The center of gravity G overlaps the second cells 55b in vehicle side view. The second cells 55b include a portion disposed higher than the center of gravity G.

The center of gravity G is located lower than the electric component 57. The center of gravity G is located lower than the entire electric component 57.

Refer to Fig. 3. The electric component 57 overlaps the second cells 55b in vehicle plan view. The entire electric component 57 overlaps the second cells 55b in vehicle plan view.

### 7. Disposing locations

Refer to Fig. 2. The seat 21 is disposed above the vehicle body frame 11. The seat 21 does not overlap the vehicle body frame 11 in vehicle side view.

For example, the seat 21 is disposed more rearward than the down frame 13. The seat 21 is disposed above the lower frame 14. The seat 21 is disposed higher than the lower frame 14. The seat 21 is disposed above the seat frame 15. The seat 21 is disposed higher than the seat frame 15.

The seat 21 has a front end 21f. The front end 21f is disposed more rearward than the down frame 13. The lower frame 14 extends from a position more forward than the front end 21f to a position more rearward than the front end 21f. The front end 21f is disposed more forward than the seat frame 15.

The seat 21 has a rear end 21r. The rear end 21r is disposed more rearward than the front end 21f. The rear end 21r is disposed more rearward than the vehicle body frame 11. The rear end 21r is disposed more rearward than the seat frame 15.

The seat frame 15 has a rear end 15r. The rear end 15r is disposed more forward than the rear end 21r.

The foot board 22 is disposed above the vehicle body frame 11. The foot board 22 may overlap the vehicle body frame 11 in vehicle side view.

For example, the foot board 22 extends rearward from the down frame 13. The foot board 22 is disposed above the lower frame 14. The foot board 22 may include a portion overlapping the lower frame 14 in vehicle side view. Alternatively, the foot board 22 may not include a portion overlapping the lower frame 14 in vehicle side view. At least a part of the foot board 22 is disposed more forward than the seat frame 15. The seat frame 15 extends rearward and upward from a position lower than the foot board 22. The foot board 22 is disposed more forward than the rear end 15r. The foot board 22 is disposed lower than the rear end 15r.

The upper edge 22e is disposed above the lower frame 14 in vehicle side view. The upper edge 22e is disposed higher than the lower frame 14 in vehicle side view. The upper edge 22e does not overlap the lower frame 14 in vehicle side view.

The rear axle 28 is disposed more rearward than the vehicle body frame 11. The rear axle 28 does not overlap the vehicle body frame 11 in vehicle side view.

For example, the rear axle 28 is disposed more rearward than the seat frame 15. The rear axle 28 is disposed more rearward than the rear end 15r. The rear axle 28 is disposed at substantially the same height position as the lower frame 14. The rear axle 28 is disposed lower than the seat frame 15.

The rear wheel 29 is disposed more rearward than the vehicle body frame 11. The rear wheel 29 does not overlap the vehicle body frame 11 in vehicle side view.

For example, the rear wheel 29 is disposed more rearward than the seat frame 15. The rear wheel 29 is disposed at substantially the same height position as the lower frame 14 and the seat frame 15.

The rear wheel 29 has a front end 29f. The front end 29f is disposed more forward than the rear axle 28. The front end 29f is disposed more rearward than the vehicle body frame 11. The front end 29f is disposed more rearward than the seat frame 15. The front end 29f is disposed more rearward than the rear end 15r.

The rear wheel 29 has an upper end 29t. The upper end 29t is disposed higher than the rear axle 28. The upper end 29t is disposed higher than the lower frame 14. The upper end 29t is disposed at substantially the same height position as the seat frame 15. The upper end 29t is disposed lower than the rear end 15r.

The housing box 31 is disposed above the vehicle body frame 11. The housing box 31 overlaps the vehicle body frame 11 in vehicle side view.

For example, the housing box 31 is disposed more rearward than the down frame 13. The housing box 31 is disposed above the lower frame 14. The housing box 31 is disposed higher than the lower frame 14. The lower end 31b is disposed higher than the lower frame 14. The housing box 31 is disposed above the seat frame 15. The housing box 31 includes a portion disposed at substantially the same height position as the seat frame 15. The lower end 31b is disposed lower than the rear end 15r. The housing box 31 overlaps the seat frame 15 in vehicle side view. The housing box 31 overlaps the rear end 15r in vehicle side view.

The housing box 31 has a front end 31f. The front end 31f is disposed more rearward than the down frame 13. The lower frame 14 extends from a position more forward than the front end 31f to a position more rearward than the front end 31f. The front end 31f is disposed more forward than the seat frame 15.

The housing box 31 has a rear end 31r. The rear end 31r is disposed more rearward than the front end 31f. The rear end 31r is disposed more rearward than the vehicle body frame 11. The rear end 31r is disposed more rearward than the seat frame 15. The rear end 31r is disposed more rearward than the rear end 15r.

The opening 31a is disposed higher than the lower frame 14. The opening 31a is disposed higher than the seat frame 15. The opening 31a is disposed higher than the rear end 15r.

The rear part 32 is disposed above the vehicle body frame 11. The rear part 32 overlaps the vehicle body frame 11 in vehicle side view.

For example, the rear part 32 is disposed more rearward than the lower frame 14. The rear part 32 is disposed higher than the lower frame 14. The lower end 32b is disposed higher than the lower frame 14. The rear part 32 is disposed above the seat frame 15. The rear part 32 includes a portion disposed at substantially the same height position as the seat frame 15. The rear part 32 overlaps the seat frame 15 in vehicle side view. The rear part 32 overlaps the rear end 15r in vehicle side view. The lower end 32b is disposed lower than the rear end 15r.

The front part 33 is disposed above the vehicle body frame 11. The front part 33 does not overlap the vehicle body frame 11 in vehicle side view.

For example, the front part 33 is disposed above the lower frame 14. The front part 33 is disposed higher than the lower frame 14. The lower end 33b is disposed higher than the lower frame 14. The front part 33 is disposed more forward than the seat frame 15. The front part 33 is disposed more forward than the rear end 15r. The lower end 33b is disposed more forward than the rear end 15r. The lower end 33b is disposed lower than the rear end 15r.

The electric motor 41 is disposed below the vehicle body frame 11. The electric motor 41 overlaps the vehicle body frame 11 in vehicle side view.

For example, the electric motor 41 is disposed more rearward than the lower frame 14. The electric motor 41 is disposed at substantially the same height position as the lower frame 14. The electric motor 41 has an upper end 41t. The upper end 41t is disposed higher than the motor shaft 43. The upper end 41t is disposed higher than the lower frame 14. The seat frame 15 extends from a position more forward than the electric motor 41 to a position more rearward than the electric motor 41. The electric motor 41 is disposed more forward than the rear end 15r. The electric motor 41 is disposed below the seat frame 15. The electric motor 41 is disposed lower than the seat frame 15. The upper end 41t is disposed lower than the rear end 15r. The electric motor 41 includes a portion overlapping the seat frame 15 in vehicle side view.

The motor body 42 is disposed below the vehicle body frame 11. The motor body 42 overlaps the vehicle body frame 11 in vehicle side view.

For example, the motor body 42 is disposed more rearward than the lower frame 14. The motor body 42 is disposed at substantially the same height position as the lower frame 14. The motor body 42 is disposed below the seat frame 15. The motor body 42 is disposed lower than the seat frame 15. The motor body 42 includes a portion overlapping the seat frame 15 in vehicle side view.

The motor shaft 43 is disposed below the vehicle body frame 11. The motor shaft 43 does not overlap the vehicle body frame 11 in vehicle side view.

For example, the motor shaft 43 is disposed more rearward than the lower frame 14. The motor shaft 43 is disposed at substantially the same height position as the lower frame 14. The motor shaft 43 is disposed below the seat frame 15. The motor shaft 43 is disposed lower than the seat frame 15. The motor shaft 43 does not overlap the seat frame 15 in vehicle side view.

The drive shaft 44 is disposed below the vehicle body frame 11. The drive shaft 44 does not overlap the vehicle body frame 11 in vehicle side view.

For example, the drive shaft 44 is disposed more rearward than the lower frame 14. The drive shaft 44 is disposed higher than the lower frame 14. The drive shaft 44 is disposed below the seat frame 15. The drive shaft 44 is disposed lower than the seat frame 15. The drive shaft 44 does not overlap the seat frame 15 in vehicle side view.

The drive sprocket 45 is disposed below the vehicle body frame 11. The drive sprocket 45 does not overlap the vehicle body frame 11 in vehicle side view.

For example, the drive sprocket 45 is disposed more rearward than the lower frame 14. The drive sprocket 45 is disposed higher than the lower frame 14. The drive sprocket 45 is disposed below the seat frame 15. The drive sprocket 45 is disposed lower than the seat frame 15. The drive sprocket 45 does not overlap the seat frame 15 in vehicle side view.

The battery 51 includes a portion disposed lower than the vehicle body frame 11. The battery 51 includes a portion disposed higher than the vehicle body frame 11. The battery 51 includes a portion overlapping with the vehicle body frame 11 in vehicle side view.

For example, the battery 51 is disposed more rearward than the down frame 13. The lower frame 14 extends backward from a position more forward than the entire battery 51. The battery 51 includes a portion disposed higher than the entire lower frame 14. The battery 51 includes a portion disposed lower than the entire lower frame 14. The battery 51 extends from a position lower than the entire lower frame 14 to a position higher than the entire lower frame 14. The battery 51 includes a portion overlapping the lower frame 14 in vehicle side view. At least a part of the battery 51 is disposed more forward than the seat frame 15.

The first portion 52 includes a portion disposed lower than the vehicle body frame 11. The first portion 52 includes a portion overlapping the vehicle body frame 11 in vehicle side view.

For example, the first portion 52 is disposed more rearward than the down frame 13. The front end 52f is disposed more rearward than the down frame 13. The lower frame 14 extends from a position more forward than the front end 52f to a position more rearward than the front end 52f. The first portion 52 is disposed below the lower frame 14. The first portion 52 includes a portion disposed lower than the entire lower frame 14. The lower end 52b is disposed lower than the entire lower frame 14. The first portion 52 includes a portion overlapping the lower frame 14 in vehicle side view. The first portion 52 is disposed more forward than the seat frame 15. The first portion 52 is disposed more forward than the rear end 15r. The first portion 52 is disposed lower than the rear end 15r. The upper end 52t is disposed lower than the rear end 15r.

The second portion 53 includes a portion disposed higher than the vehicle body frame 11. The second portion 53 includes a portion overlapping the vehicle body frame 11 in vehicle side view.

For example, the second portion 53 is disposed more rearward than the down frame 13. The front end 53f is disposed more rearward than the down frame 13. The lower frame 14 extends from a position more forward than the front end 53f to a position more rearward than the front end 53f. The second portion 53 is disposed above the lower frame 14. The second portion 53 includes a portion disposed higher than the entire lower frame 14. The upper end 53t is disposed higher than the entire lower frame 14. The second portion 53 includes a portion overlapping the lower frame 14 in vehicle side view. The second portion 53 is disposed more forward than the seat frame 15. The second portion 53 is disposed more forward than the rear end 15r. The rear end 53r is disposed more forward than the rear end 15r. The second portion 53 is disposed lower than the rear end 15r. The upper end 53t is disposed lower than the rear end 15r.

The first cells 55a include a portion disposed lower than the vehicle body frame 11. The first cells 55a include a portion overlapping the vehicle body frame 11 in vehicle side view.

For example, the first cells 55a are disposed more rearward than the down frame 13. The first cells 55a are disposed below the lower frame 14. The first cells 55a include a portion disposed lower than the entire lower frame 14. The first cells 55a include a portion overlapping the lower frame 14 in vehicle side view. The first cells 55a are disposed more forward than the seat frame 15. The first cells 55a are disposed more forward than the rear end 15r. The first cells 55a are disposed lower than the rear end 15r.

The second cells 55b include a portion disposed higher than the vehicle body frame 11. The second cells 55b include a portion overlapping the vehicle body frame 11 in vehicle side view.

For example, the second cells 55b are disposed more rearward than the down frame 13. The second cells 55b are disposed above the lower frame 14. The second cells 55b include a portion disposed higher than the entire lower frame 14. The second cells 55b include a portion overlapping the lower frame 14 in vehicle side view. The second cells 55b are disposed more forward than the seat frame 15. The second cells 55b are disposed more forward than the rear end 15r. The second cells 55b are disposed lower than the rear end 15r.

The electric component 57 is disposed above the vehicle body frame 11. The electric component 57 does not overlap the vehicle body frame 11.

For example, the electric component 57 is disposed more rearward than the down frames 13. The electric component 57 is disposed above the lower frame 14. The electric component 57 is disposed higher than the lower frame 14. The electric component 57 is disposed more forward than the seat frame 15.

The center of gravity G overlaps the vehicle body frame 11 in vehicle side view.

For example, the center of gravity G is located more rearward than the down frame 13. The center of gravity G is located at substantially the same height position as the lower frame 14. The center of gravity G overlaps the lower frame 14 in vehicle side view. The center of gravity G is disposed more forward than the seat frame 15. The center of gravity G is located more forward than the rear end 15r. The center of gravity G is located lower than the rear end 15r.

At least a part of the foot board 22 is disposed more forward than the seat 21. At least a part of the foot board 22 is disposed more forward than the entire seat 21. At least a part of the foot board 22 is disposed more forward than the front end 21f. For example, the foot board 22 includes a portion disposed more rearward than the front end 21f. The foot board 22 extends from a position more forward than the front end 21f to a position more rearward than the front end 21f. The entire foot board 22 is disposed more forward than the rear end 21r.

The foot board 22 is disposed below the seat 21. At least a part of the foot board 22 is disposed lower than the seat 21. At least a part of the foot board 22 is disposed lower than the entire of the seat 21. For example, the entire foot board 22 is disposed lower than the entire seat 21. The foot board 22 does not overlap the seat 21 in vehicle side view.

The rear axle 28 is disposed more rearward than the seat 21. For example, the entire rear axle 28 is disposed more rearward than the rear end 21r.

The rear wheel 29 is disposed more rearward than the seat 21. For example, the front end 29f of the rear wheel 29 is disposed more rearward than the front end 21f. The front end 29f is disposed more forward than the rear end 21r. The rear wheel 29 includes a portion disposed more rearward than the rear end 21r. The rear wheel 29 extends from a position more forward than the rear end 21r to a position more rearward than the rear end 21r.

The rear wheel 29 is disposed below the seat 21. The rear wheel 29 is disposed lower than the seat 21. The upper end 29t of the rear wheel 29 is disposed lower than the seat 21. For example, the upper end 29t is disposed lower than the entire seat 21.

The entire housing box 31 is disposed more rearward than the front end 21f. The front end 31f is disposed more rearward than the front end 21f. The entire housing box 31 is disposed more forward than the rear end 21r. The rear end 31r is disposed more forward than the rear end 21r. The seat 21 extends from a position more forward than the front end 31f to a position more rearward than the rear end 31r.

The housing box 31 is disposed below the seat 21. The housing box 31 is disposed lower than the seat 21. At least a part of housing box 31 is disposed lower than the entire seat 21. For example, the lower end 31b is disposed lower than the entire seat 21. The housing box 31 includes a portion overlapping the seat 21 in vehicle side view. For example, the upper portion of the housing box 31 overlaps the seat 21 in vehicle side view. The opening 31a overlaps the seat 21 in vehicle side view.

The seat 21 is disposed above the opening 31a. The seat 21 opens and closes the opening 31a. When the seat 21 opens the opening 31a, the seat 21 allows the luggage to pass through the opening 31a. When the seat 21 closes the opening 31a, the seat 21 prohibits the luggage from passing through the opening 31a.

The entire rear part 32 is disposed more rearward than the front end 21f. The entire rear part 32 is disposed more forward than the rear end 21r. The rear part 32 is disposed below the seat 21. The rear part 32 is disposed lower than the seat 21. The lower end 32b is disposed lower than the entire seat 21. The rear part 32 includes a portion overlapping the seat 21 in vehicle side view.

The entire front part 33 is disposed more rearward than the front end 21f. The entire front part 33 is disposed more forward than the rear end 21r. The front part 33 is disposed below the seat 21. The front part 33 is disposed lower than the seat 21. The lower end 33b is disposed lower than the entire seat 21. The front part 33 includes a portion overlapping the seat 21 in vehicle side view.

The entire electric motor 41 is disposed more rearward than the front end 21f. The entire electric motor 41 is disposed more forward than the rear end 21r. The electric motor 41 is disposed below the seat 21. The electric motor 41 is disposed lower than the seat 21. The upper end 41t is disposed lower than the entire seat 21. The electric motor 41 does not overlap the seat 21 in vehicle side view.

The entire motor body 42 is disposed more rearward than the front end 21f. The entire motor body 42 is disposed more forward than the rear end 21r. The motor body 42 is disposed below the seat 21. The motor body 42 is disposed lower than the seat 21. The motor body 42 does not overlap the seat 21 in vehicle side view.

The entire motor shaft 43 is disposed more rearward than the front end 21f. The entire motor shaft 43 is disposed more forward than the rear end 21r. The motor shaft 43 is disposed below the seat 21. The motor shaft 43 is disposed lower than the seat 21. The motor shaft 43 does not overlap the seat 21 in vehicle side view.

The entire drive shaft 44 is disposed more rearward than the front end 21f. The entire drive shaft 44 is disposed more forward than the rear end 21r. The drive shaft 44 is disposed below the seat 21. The drive shaft 44 is disposed lower than the seat 21. The drive shaft 44 does not overlap the seat 21 in vehicle side view.

The entire drive sprocket 45 is disposed more rearward than the front end 21f. The entire drive sprocket 45 is disposed more forward than the rear end 21r. The drive sprocket 45 is disposed below the seat 21. The drive sprocket 45 is disposed lower than the seat 21. The drive sprocket 45 does not overlap the seat 21 in vehicle side view.

The battery 51 extends from a position more forward than the front end 21f to a position more rearward than the front end 21f. The entire battery 51 is disposed more forward than the rear end 21r.

The battery 51 is disposed below the seat 21. The battery 51 is disposed lower than the seat 21. The entire battery 51 is disposed lower than the entire seat 21. The battery 51 does not overlap the seat 21 in vehicle side view.

At least a part of the first portion 52 is disposed more forward than the front end 21f. The front end 52f is disposed more forward than the front end 21f. For example, the first portion 52 includes a portion disposed more rearward than the front end 21f. The first portion 52 extends from a position more forward than the front end 21f to a position more rearward than the front end 21f. The entire first portion 52 is disposed more forward than the rear end 21r. The first portion 52 is disposed below the seat 21. The first portion 52 is disposed lower than the seat 21. The upper end 52t is disposed lower than the entire seat 21. The first portion 52 does not overlap the seat 21 in vehicle side view.

At least a part of the second portion 53 is disposed more rearward than the front end 21f. The rear end 53r is disposed more rearward than the front end 21f. For example, the front end 53f is disposed more rearward than the front end 21f. The entire second portion 53 is disposed more forward than the front end 21f. The rear end 53r is disposed more forward than the rear end 21r. The entire second portion 53 is disposed more forward than the rear end 21r. The second portion 53 is disposed below the seat 21. The second portion 53 is disposed lower than the seat 21. The upper end 53t is disposed lower than the entire seat 21. The second portion 53 does not overlap the seat 21 in vehicle side view.

At least a part of the first cells 55a is disposed more forward than the front end 21f. The first cells 55a include a portion disposed more forward than the front end 21f. For example, the first cells 55a include a portion disposed more rearward than the front end 21f. The first cells 55a extend from a position more forward than the front end 21f to a position more rearward than the front end 21f. The entire first cells 55a are disposed more forward than the rear end 21r. The first cells 55a are disposed below the seat 21. The first cells 55a are disposed lower than the seat 21. The first cells 55a do not overlap the seat 21 in vehicle side view.

At least a part of the second cells 55b is disposed more rearward than the front end 21f. For example, the entire second cells 55b are disposed more rearward than the front end 21f. The entire second cells 55b are disposed more forward than the rear end 21r. The second cells 55b are disposed below the seat 21. The second cells 55b are disposed lower than the seat 21. The second cells 55b do not overlap the seat 21 in vehicle side view.

At least a part of the electric component 57 is disposed more rearward than the front end 21f. For example, the entire electric component 57 is disposed more rearward than the front end 21f. The entire electric component 57 is disposed more forward than the rear end 21r. The electric component 57 is disposed below the seat 21. The electric component 57 is disposed lower than the seat 21. The electric component 57 does not overlap the seat 21 in vehicle side view.

The center of gravity G is disposed more rearward than the front end 21f. The center of gravity G is disposed more forward than the rear end 21r. The center of gravity G is located below the seat 21. The center of gravity G is located lower than the seat 21. The center of gravity G does not overlap the seat 21 in vehicle side view.

The rear axle 28 is disposed more rearward than the foot board 22. The entire rear axle 28 is disposed more rearward than the entire foot board 22. The rear axle 28 is disposed lower than the foot board 22. For example, the entire rear axle 28 is disposed lower than the entire foot board 22. The entire rear axle 28 is disposed lower than the upper edge 22e. The rear axle 28 does not overlap the foot board 22 in vehicle side view.

The rear wheel 29 is disposed more rearward than the foot board 22. The entire rear wheel 29 is disposed more rearward than the entire foot board 22. The front end 29f is disposed more rearward than the entire foot board 22. The upper end 29t is disposed higher than the entire foot board 22. The rear wheel 29 extends from a position lower than the entire foot board 22 to a position higher than the entire foot board 22. The rear wheel 29 does not overlap the foot board 22 in vehicle side view.

The housing box 31 is disposed more rearward than the foot board 22. Specifically, a part of the housing box 31 is disposed more rearward than the entire foot board 22. A part of the foot board 22 is disposed more forward than the entire housing box 31. Specifically, the foot board 22 extends from a position more forward than the front end 31f to a position more rearward than the front end 31f. The entire foot board 22 is disposed more forward than the rear end 31r. In other words, the rear end 31r is disposed more rearward than the entire foot board 22. The housing box 31 is disposed above the foot board 22. The housing box 31 is disposed higher than the foot board 22. At least a part of the housing box 31 is disposed higher than the entire foot board 22. The lower end 31b of the housing box 31 is disposed higher than at least a part of the foot board 22. The housing box 31 does not overlap the foot board 22 in vehicle side view.

The rear part 32 is disposed more rearward than the foot board 22. At least a part of the rear part 32 is disposed more rearward than the entire foot board 22. The rear part 32 is disposed higher than the foot board 22. The lower end 32b of the rear part 32 is disposed higher than at least a part of the foot board 22. The rear part 32 does not overlap the foot board 22 in vehicle side view.

The foot board 22 extends rearward from a position more forward than the entire front part 33. For example, the foot board 22 extends from a position more forward than the entire front part 33 to a position more rearward than the entire front part 33. The front part 33 is disposed above the foot board 22. The front part 33 is disposed higher than the foot board 22. The lower end 33b of the front part 33 is disposed higher than the entire foot board 22. The front part 33 does not overlap the foot board 22 in vehicle side view.

At least a part of the electric motor 41 is disposed more rearward than the entire foot board 22. At least a part of the foot board 22 is disposed more forward than the entire electric motor 41. The electric motor 41 is disposed at substantially the same height position as the foot board 22. The upper end 41t is disposed higher than at least a part of the foot board 22. The electric motor 41 includes a portion located lower than the entire foot board 22. For example, the electric motor 41 includes a portion overlapping the foot board 22 in vehicle side view. Alternatively, the electric motor 41 may not include a portion overlapping the foot board 22 in vehicle side view.

At least a part of the motor body 42 is disposed more rearward than the entire foot board 22. The motor body 42 is disposed at substantially the same height position as the foot board 22. For example, the motor body 42 includes a portion overlapping the foot board 22 in vehicle side view. Alternatively, the motor body 42 may not include a portion overlapping the foot board 22 in vehicle side view.

The motor shaft 43 is disposed more rearward than the foot board 22. The entire motor shaft 43 is disposed more rearward than the entire foot board 22. The motor shaft 43 is disposed at substantially the same height position as the foot board 22. The entire motor shaft 43 is disposed lower than the upper edge 22e in vehicle side view. The motor shaft 43 does not overlap the foot board 22 in vehicle side view.

The drive shaft 44 is disposed more rearward than the foot board 22. The entire drive shaft 44 is disposed more rearward than the entire foot board 22. The drive shaft 44 is disposed at substantially the same height position as the foot board 22. The drive shaft 44 is disposed at substantially the same height position as the upper edge 22e. The drive shaft 44 does not overlap the foot board 22 in vehicle side view.

The drive sprocket 45 is disposed more rearward than the foot board 22. The entire drive sprocket 45 is disposed more rearward than the entire foot board 22. The drive sprocket 45 is disposed at substantially the same height position as the foot board 22. The drive sprocket 45 is disposed at substantially the same height position as the upper edge 22e. The drive sprocket 45 does not overlap the foot board 22 in vehicle side view.

The foot board 22 extends rearward from a position more forward than the entire battery 51. For example, the foot board 22 extends from a position more forward than the entire battery 51 to a position more rearward than the entire battery 51. The battery 51 includes a portion disposed higher than the entire foot board 22. The battery 51 includes a portion disposed lower than the entire foot board 22. The battery 51 extends from a position lower than the entire foot board 22 to a position higher than the entire of the foot board 22. The battery 51 overlaps the foot board 22 in vehicle side view. The battery 51 overlaps the upper edge 22e of the foot board 22 in vehicle side view.

The foot board 22 extends from a position more forward than the front end 52f to a position more rearward than the front end 52f. For example, the foot board 22 extends from a position more forward than the front end 52f to a position more rearward than the rear end 53r. The first portion 52 is disposed below the foot board 22. The first portion 52 includes a portion disposed lower than the foot board 22. The first portion 52 includes a portion disposed lower than the entire foot board 22. The lower end 52b of the first portion 52 is disposed lower than the foot board 22. The lower end 52b is disposed lower than the entire foot board 22. The first portion 52 includes a portion overlapping the foot board 22 in vehicle side view. The upper end 52t of the first portion 52 overlaps the foot board 22 in vehicle side view.

The first portion 52 is disposed below the upper edge 22e in vehicle side view. The entire first portion 52 is disposed lower than the upper edge 22e in vehicle side view. The upper end 52t is disposed lower than the upper edge 22e in vehicle side view. The first portion 52 does not overlap the upper edge 22e in vehicle side view.

The first portion 52 is disposed below the upper edge 23e of the right portion 23 in vehicle side view. The entire first portion 52 is disposed lower than the upper edge 23e in vehicle side view. The upper end 52t is disposed lower than the upper edge 23e in vehicle side view. The first portion 52 does not overlap the upper edge 23e in vehicle side view.

The first portion 52 is disposed below the upper edge 24e of the left portion 24 in vehicle side view. The entire first portion 52 is disposed lower than the upper edge 24e in vehicle side view. The upper end 52t is disposed lower than the upper edge 24e in vehicle side view. The first portion 52 does not overlap the upper edge 24e in vehicle side view.

The first portion 52 is disposed below the upper edge 25e of the central portion 25 in vehicle side view. The entire first portion 52 is disposed lower than the upper edge 25e in vehicle side view. The upper end 52t is disposed lower than the upper edge 25e in vehicle side view. The first portion 52 does not overlap the upper edge 25e in vehicle side view.

The foot board 22 extends from a position more forward than the front end 53f to a position more rearward than the rear end 53r. The second portion 53 is disposed above the foot board 22. The second portion 53 includes a portion disposed higher than the foot board 22. The second portion 53 includes a portion disposed higher than the entire foot board 22. The upper end 53t of the second portion 53 is disposed higher than the foot board 22. The upper end 53t is disposed higher than the entire foot board 22. The second portion 53 includes a portion overlapping the foot board 22 in vehicle side view.

The second portion 53 includes a portion disposed higher than the upper edge 22e in vehicle side view. The upper end 53t is disposed higher than the upper edge 22e in vehicle side view. The second portion 53 overlaps the upper edge 22e in vehicle side view.

The second portion 53 includes a portion disposed higher than the upper edge 23e of the right portion 23 in vehicle side view. The upper end 53t is disposed higher than the upper edge 23e in vehicle side view. The second portion 53 overlaps the upper edge 23e in vehicle side view.

The second portion 53 includes a portion disposed higher than the upper edge 24e of the left portion 24 in vehicle side view. The upper end 53t is disposed higher than the upper edge 24e in vehicle side view. The second portion 53 overlaps the upper edge 24e in vehicle side view.

The second portion 53 includes a portion disposed higher than the upper edge 25e of the central portion 25 in vehicle side view. The upper end 53t is disposed higher than the upper edge 25e in vehicle side view. The second portion 53 overlaps the upper edge 25e in vehicle side view.

The first cells 55a are disposed below the foot board 22. The first cells 55a are disposed lower than the foot board 22. The first cells 55a include a portion disposed lower than the entire foot board 22. The first cells 55a include a portion overlapping the foot board 22 in vehicle side view.

The first cells 55a are disposed below the upper edge 22e in vehicle side view. The entire first cells 55a are disposed lower than the upper edge 22e in vehicle side view. The first cells 55a do not overlap the upper edge 22e in vehicle side view.

The second cells 55b are disposed above the foot board 22. The second cells 55b include a portion disposed higher than the foot board 22. The second cells 55b include a portion disposed higher than the entire foot board 22. The second cells 55b include a portion overlapping the foot board 22 in vehicle side view.

The second cells 55b are disposed above the upper edge 22e in vehicle side view. The second cells 55b include a portion disposed higher than the upper edge 22e in vehicle side view. The second cells 55b overlap the upper edge 22e in vehicle side view.

The foot board 22 extends from a position more forward than the entire electric component 57 to a position more rearward than the entire electric component 57. The electric component 57 is disposed above the foot board 22. The electric component 57 is disposed higher than the foot board 22. The entire electric component 57 is disposed higher than the entire foot board 22. The electric component 57 does not overlap the foot board 22 in vehicle side view.

The electric component 57 is disposed above the upper edge 22e in vehicle side view. The entire electric component 57 is disposed higher than the upper edge 22e in vehicle side view. The second cells 55b do not overlap the upper edge 22e in vehicle side view.

The foot board 22 extends from a position more forward than the center of gravity G to a position more rearward than the center of gravity G. The center of gravity G is located at substantially the same height position as the foot board 22 in vehicle side view. The center of gravity G overlaps the foot board 22 in vehicle side view.

The center of gravity G is located below the upper edge 22e in vehicle side view. The center of gravity G is located lower than the upper edge 22e in vehicle side view. The center of gravity G does not overlap the upper edge 22e in vehicle side view.

The housing box 31 is disposed more forward than the rear axle 28. The rear end 31r is disposed more forward than the entire rear axle 28. The housing box 31 is disposed higher than the rear axle 28. The lower end 31b is disposed higher than the entire rear axle 28. The housing box 31 does not overlap the rear axle 28 in vehicle side view.

The rear part 32 is disposed more forward than the rear axle 28. The entire rear part 32 is disposed more forward than the entire rear axle 28. The rear part 32 is disposed higher than the rear axle 28. The lower end 32b is disposed higher than the entire rear axle 28. The rear part 32 does not overlap the rear axle 28 in vehicle side view.

The front part 33 is disposed more forward than the rear axle 28. The entire front part 33 is disposed more forward than the entire rear axle 28. The front part 33 is disposed higher than the rear axle 28. The lower end 33b is disposed higher than the entire rear axle 28. The front part 33 does not overlap the rear axle 28 in vehicle side view.

The electric motor 41 is disposed more forward than the rear axle 28. The entire electric motor 41 is disposed more forward than the entire rear axle 28. The electric motor 41 is disposed at substantially the same height position as the rear axle 28. The upper end 41t is disposed higher than the entire rear axle 28. The electric motor 41 extends from a position lower than the entire rear axle 28 to a position higher than the entire rear axle 28. The electric motor 41 does not overlap the rear axle 28 in vehicle side view.

The motor body 42 is disposed more forward than the rear axle 28. The entire motor body 42 is disposed more forward than the entire rear axle 28. The motor body 42 is disposed at substantially the same height position as the rear axle 28. The motor body 42 does not overlap the rear axle 28 in vehicle side view.

The motor shaft 43 is disposed more forward than the rear axle 28. The entire motor shaft 43 is disposed more forward than the entire rear axle 28. The motor shaft 43 is disposed higher than the rear axle 28. At least a part of the motor shaft 43 is disposed higher than the entire rear axle 28. The motor shaft 43 does not overlap the rear axle 28 in vehicle side view.

The drive shaft 44 is disposed more forward than the rear axle 28. The entire drive shaft 44 is disposed more forward than the entire rear axle 28. The drive shaft 44 is disposed higher than the rear axle 28. At least a part of the drive shaft 44 is disposed higher than the entire rear axle 28. The drive shaft 44 does not overlap the rear axle 28 in vehicle side view.

The drive sprocket 45 is disposed more forward than the rear axle 28. The entire drive sprocket 45 is disposed more forward than the entire rear axle 28. The drive sprocket 45 is disposed higher than the rear axle 28. At least a part of the drive sprocket 45 is disposed higher than the entire rear axle 28. The drive sprocket 45 does not overlap the rear axle 28 in vehicle side view.

The battery 51 is disposed more forward than the rear axle 28. The entire battery 51 is disposed more forward than the entire rear axle 28. The battery 51 is disposed at substantially the same height position as the rear axle 28. The battery 51 includes a portion disposed lower than the entire rear axle 28. The battery 51 includes a portion disposed higher than the entire rear axle 28. The battery 51 extends from a position lower than the entire rear axle 28 to a position higher than the entire rear axle 28. The battery 51 does not overlap the rear axle 28 in vehicle side view.

The first portion 52 is disposed more forward than the rear axle 28. The entire first portion 52 is disposed more forward than the entire rear axle 28. The first portion 52 is disposed at substantially the same height position as the rear axle 28. The upper end 52t is disposed higher than the entire rear axle 28. The lower end 52b is disposed lower than the entire rear axle 28. The first portion 52 does not overlap the rear axle 28 in vehicle side view.

The second portion 53 is disposed more forward than the rear axle 28. The rear end 53r is disposed more forward than the entire rear axle 28. The second portion 53 is disposed higher than the rear axle 28. At least a part of the second portion 53 is disposed higher than the entire rear axle 28. The upper end 53t is disposed higher than the entire rear axle 28. The second portion 53 does not overlap the rear axle 28 in vehicle side view.

The first cells 55a are disposed more forward than the rear axle 28. The entire first cells 55a are disposed more forward than the entire rear axle 28. The first cells 55a are disposed at substantially the same height position as the rear axle 28. The first cells 55a include a portion disposed lower than the entire rear axle 28. The first cells 55a do not overlap the rear axle 28 in vehicle side view.

The second cells 55b are disposed more forward than the rear axle 28. The entire second cells 55b are disposed more forward than the entire rear axle 28. The second cells 55b are disposed higher than the rear axle 28. At least a part of the second cells 55b is disposed higher than the entire rear axle 28. The second cells 55b do not overlap the rear axle 28 in vehicle side view.

The electric component 57 is disposed more forward than the rear axle 28. The entire electric component 57 is disposed more forward than the entire rear axle 28. The electric component 57 is disposed higher than the rear axle 28. The entire electric component 57 is disposed higher than the entire rear axle 28. The electric component 57 does not overlap the rear axle 28 in vehicle side view.

The center of gravity G is located more forward than the rear axle 28. The center of gravity G is located more forward than the entire rear axle 28. The center of gravity G is located at substantially the same height position as the rear axle 28. For example, the center of gravity G is located slightly higher than the rear axle 28. For example, the center of gravity G is located higher than at least a part of the rear axle 28. The center of gravity G does not overlap the rear axle 28 in vehicle side view.

The housing box 31 is disposed more forward than the rear wheel 29. A part of the housing box 31 is disposed more forward than the entire rear wheel 29. Specifically, the front end 31f is disposed more forward than the front end 29f. The rear end 31r is disposed more rearward than the front end 29f. The housing box 31 extends from a position more forward than the front end 29f to a position more rearward than the front end 29f. The rear wheel 29 includes a portion disposed more rearward than the entire housing box 31. The rear wheel 29 extends from a position more forward than the rear end 31r to a position more rearward than the rear end 31r. The housing box 31 is disposed above the rear wheel 29. The housing box 31 is disposed higher than the rear wheel 29. At least a part of the housing box 31 is disposed higher than the upper end 29t. The opening 31a of the housing box 31 is disposed higher than the upper end 29t. For example, the housing box 31 includes a portion disposed lower than the upper end 29t. The lower end 31b of the housing box 31 is disposed lower than the upper end 29t. The lower end 31b is disposed more forward than the upper end 29t. The housing box 31 extends from a position higher than the upper end 29t to a position lower than the upper end 29t. The housing box 31 extends from the position higher than the upper end 29t, passes through a position in front of the rear wheel 29, and reaches the position lower than the upper end 29t. The housing box 31 does not overlap the rear wheel 29 in vehicle side view.

The rear part 32 extends from a position more forward than the front end 29f to a position more rearward than the front end 29f. The rear part 32 is disposed above the rear wheel 29. At least a part of the rear part 32 is disposed higher than the upper end 29t. For example, the rear part 32 includes a portion disposed lower than the upper end 29t. The lower end 32b of the rear part 32 is disposed lower than the upper end 29t. The lower end 32b is disposed more forward than the upper end 29t. The rear part 32 extends from a position higher than the upper end 29t to a position lower than the upper end 29t. The rear part 32 extends from the position higher than the upper end 29t, passes through a position in front of the rear wheel 29, and reaches the position lower than the upper end 29t. The rear part 32 does not overlap the rear wheel 29 in vehicle side view.

The front part 33 is disposed more forward than the rear wheel 29. The entire front part 33 is disposed more forward than the front end 21f. The front part 33 is disposed higher than the rear wheel 29. For example, the lower end 33b is disposed higher than the upper end 29t. The front part 33 does not overlap the rear wheel 29 in vehicle side view.

The electric motor 41 is disposed more forward than the rear wheel 29. The entire electric motor 41 is disposed more forward than the front end 29f. The electric motor 41 is disposed at substantially the same height position as the rear wheel 29. The entire electric motor 41 is disposed lower than the upper end 29t. The electric motor 41 does not overlap the rear wheel 29 in vehicle side view.

The motor body 42 is disposed more forward than the rear wheel 29. The entire motor body 42 is disposed more forward than the front end 29f. The motor body 42 is disposed at substantially the same height position as the rear wheel 29. The entire motor body 42 is disposed lower than the upper end 29t. The motor body 42 does not overlap the rear wheel 29 in vehicle side view.

The motor shaft 43 is disposed more forward than the rear wheel 29. The entire motor shaft 43 is disposed more forward than the front end 29f. The motor shaft 43 is disposed at substantially the same height position as the rear wheel 29. The entire motor shaft 43 is disposed lower than the upper end 29t. The motor shaft 43 does not overlap the rear wheel 29 in vehicle side view.

The drive shaft 44 is disposed more forward than the rear wheel 29. The entire drive shaft 44 is disposed more forward than the front end 29f. The drive shaft 44 is disposed at substantially the same height position as the rear wheel 29. The entire drive shaft 44 is disposed lower than the upper end 29t. The drive shaft 44 does not overlap the rear wheel 29 in vehicle side view.

The drive sprocket 45 is disposed more forward than the rear wheel 29. The entire drive sprocket 45 is disposed more forward than the front end 29f. The drive sprocket 45 is disposed at substantially the same height position as the rear wheel 29. The entire drive sprocket 45 is disposed lower than the upper end 29t. The drive sprocket 45 does not overlap the rear wheel 29 in vehicle side view.

The battery 51 is disposed more forward than the rear wheel 29. The entire battery 51 is disposed more forward than the front end 29f. The battery 51 is disposed at substantially the same height position as the rear wheel 29. The entire battery 51 is disposed lower than the upper end 29t. The battery 51 does not overlap the rear wheel 29 in vehicle side view.

The first portion 52 is disposed more forward than the rear wheel 29. The entire first portion 52 is disposed more forward than the front end 29f. The first portion 52 is disposed at substantially the same height position as the rear wheel 29. The upper end 52t is disposed lower than the upper end 29t. The first portion 52 does not overlap the rear wheel 29 in vehicle side view.

The second portion 53 is disposed more forward than the rear wheel 29. The rear end 53r is disposed more forward than the front end 29f. The second portion 53 is disposed at substantially the same height position as the rear wheel 29. The upper end 53t is disposed lower than the upper end 29t. The second portion 53 does not overlap the rear wheel 29 in vehicle side view.

The first cells 55a are disposed more forward than the rear wheel 29. The entire first cells 55a are disposed more forward than the front end 29f. The first cells 55a are disposed at substantially the same height position as the rear wheel 29. The entire first cells 55a are disposed lower than the upper end 29t. The first cells 55a do not overlap the rear wheel 29 in vehicle side view.

The second cells 55b are disposed more forward than the rear wheel 29. The entire second cells 55b are disposed more forward than the front end 29f. The second cells 55b are disposed at substantially the same height position as the rear wheel 29. The entire second cells 55b are disposed lower than the upper end 29t. The second cells 55b do not overlap the rear wheel 29 in vehicle side view.

The electric component 57 is disposed more forward than the rear wheel 29. The entire electric component 57 is disposed more forward than the front end 29f. The electric component 57 is disposed at substantially the same height position as the rear wheels 29. The entire electric component 57 is disposed lower than the upper end 29t. The electric component 57 does not overlap the rear wheels 29 in vehicle side view.

The center of gravity G is located more forward than the rear wheel 29. The center of gravity G is located more forward than the front end 29f. The center of gravity G is located at substantially the same height position as the rear wheel 29. The center of gravity G is located lower than the upper end 29t. The center of gravity G does not overlap the rear wheel 29 in vehicle side view.

The entire electric motor 41 is disposed more rearward than the front end 31f of the housing box 31. The entire electric motor 41 is disposed more forward than the rear end 31r of the housing box 31. The housing box 31 extends from a position more forward than the entire electric motor 41 to a position more rearward than the entire electric motor 41. The electric motor 41 is disposed below the housing box 31. The electric motor 41 is disposed lower than the housing box 31. At least a part of the electric motor 41 is disposed lower than the lower end 31b. For example, the upper end 41t of the electric motor 41 is disposed lower than the lower end 31b. The electric motor 41 does not overlap the housing box 31 in vehicle side view.

The electric motor 41 is disposed below the rear part 32. In other words, the rear part 32 is disposed above the electric motor 41. The electric motor 41 is disposed lower than the rear part 32. At least a part of the electric motor 41 is disposed lower than the lower end 32b. For example, the upper end 41t is disposed lower than the lower end 32b. The electric motor 41 does not overlap the rear part 32 in vehicle side view.

The electric motor 41 is disposed more rearward than the front part 33. At least a part of the electric motor 41 is disposed more rearward than the entire front part 33. For example, the entire electric motor 41 is disposed more rearward than the entire front part 33. The electric motor 41 is disposed lower than the front part 33. At least a part of the electric motor 41 is disposed lower than the lower end 33b. For example, the upper end 41t is disposed lower than the lower end 33b. The electric motor 41 does not overlap the front part 33 in vehicle side view.

The entire motor body 42 is disposed more rearward than the front end 31f of the housing box 31. The entire motor body 42 is disposed more forward than the rear end 31r of the housing box 31. The motor body 42 is disposed below the housing box 31. The motor body 42 is disposed lower than the housing box 31. At least a part of the motor body 42 is disposed lower than the lower end 31b. The motor body 42 does not overlap the housing box 31 in vehicle side view.

The motor body 42 is disposed below the rear part 32. The motor body 42 is disposed lower than the rear part 32. At least a part of the motor body 42 is disposed lower than the lower end 32b. The motor body 42 does not overlap the rear part 32 in vehicle side view.

The motor body 42 is disposed more rearward than the front part 33. At least a part of the motor body 42 is disposed more rearward than the entire front part 33. The motor body 42 is disposed lower than the front part 33. At least a part of the motor body 42 is disposed lower than the lower end 33b. The motor body 42 does not overlap the front part 33 in vehicle side view.

The entire motor shaft 43 is disposed more rearward than the front end 31f of the housing box 31. The entire motor shaft 43 is disposed more forward than the rear end 31r of the housing box 31. The motor shaft 43 is disposed below the housing box 31. The motor shaft 43 is disposed lower than the housing box 31. At least a part of the motor shaft 43 is disposed lower than the lower end 31b. The motor shaft 43 does not overlap the housing box 31 in vehicle side view.

The motor shaft 43 is disposed below the rear part 32. The motor shaft 43 is disposed lower than the rear part 32. At least a part of the motor shaft 43 is disposed lower than the lower end 32b. The motor shaft 43 does not overlap the rear part 32 in vehicle side view.

The motor shaft 43 is disposed more rearward than the front part 33. At least a part of the motor shaft 43 is disposed more rearward than the entire front part 33. The motor shaft 43 is disposed lower than the front part 33. At least a part of the motor shaft 43 is disposed lower than the lower end 33b. The motor shaft 43 does not overlap the front part 33 in vehicle side view.

The entire drive shaft 44 is disposed more rearward than the front end 31f. The entire drive shaft 44 is disposed more forward than the rear end 31r. The drive shaft 44 is disposed below the housing box 31. The drive shaft 44 is disposed lower than the housing box 31. At least a part of the drive shaft 44 is disposed lower than the lower end 31b. The drive shaft 44 does not overlap the housing box 31 in vehicle side view.

The drive shaft 44 is disposed below the rear part 32. The drive shaft 44 is disposed lower than the rear part 32. At least a part of the drive shaft 44 is disposed lower than the lower end 32b. The drive shaft 44 does not overlap the rear part 32 in vehicle side view.

The drive shaft 44 is disposed more rearward than the front part 33. At least a part of the drive shaft 44 is disposed more rearward than the entire front part 33. The drive shaft 44 is disposed lower than the front part 33. At least a part of the drive shaft 44 is disposed lower than the lower end 33b. The drive shaft 44 does not overlap the front part 33 in vehicle side view.

The entire drive sprocket 45 is disposed more rearward than the front end 31f. The entire drive sprocket 45 is disposed more forward than the rear end 31r. The drive sprocket 45 is disposed below the housing box 31. The drive sprocket 45 is disposed lower than the housing box 31. At least a part of the drive sprocket 45 is disposed lower than the lower end 31b. The drive sprocket 45 does not overlap the housing box 31 in vehicle side view.

The drive sprocket 45 is disposed below the rear part 32. The drive sprocket 45 is disposed lower than the rear part 32. At least a part of the drive sprocket 45 is disposed lower than the lower end 32b. The drive sprocket 45 does not overlap the rear part 32 in vehicle side view.

The drive sprocket 45 is disposed more rearward than the front part 33. At least a part of the drive sprocket 45 is disposed more rearward than the entire front part 33. The drive sprocket 45 is disposed lower than the front part 33. At least a part of the drive sprocket 45 is disposed lower than the lower end 33b. The drive sprocket 45 does not overlap the front part 33 in vehicle side view.

The battery 51 is disposed outside the housing box 31. The battery 51 is not disposed inside the housing box 31. The battery 51 does not have a portion disposed inside the housing box 31. The battery 51 is not housed in the housing box 31. The battery 51 does not overlap the housing box 31 in vehicle side view.

The battery 51 is disposed more forward than the housing box 31. At least a part of the battery 51 is disposed more forward than the front end 31f. For example, the battery 51 includes a portion disposed more rearward than the front end 31f. The battery 51 extends from a position more forward than the front end 31f to a position more rearward than the front end 31f. The entire battery 51 is disposed more forward than the rear end 31r. The rear end 31r is disposed more rearward than the entire battery 51. The housing box 31 extends to a position more rearward than the entire battery 51. The battery 51 is disposed below the housing box 31. The battery 51 is disposed lower than the housing box 31. The battery 51 includes a portion disposed lower than the lower end 31b. The battery 51 includes a portion disposed higher than the lower end 31b. The battery 51 extends from a position lower than the lower end 31b to a position higher than the lower end 31b.

The battery 51 is disposed more forward than the rear part 32. At least a part of the battery 51 is disposed more forward than the entire rear part 32. For example, the entire battery 51 is disposed more forward than the entire rear part 32. The battery 51 includes a portion disposed lower than the lower end 32b. The battery 51 includes a portion disposed higher than the lower end 32b. The battery 51 extends from a position lower than the lower end 32b to a position higher than the lower end 32b. The battery 51 does not overlap the rear part 32 in vehicle side view.

At least a part of the battery 51 is disposed more forward than the front part 33. The battery 51 includes a portion disposed more forward than the entire front part 33. The battery 51 includes a portion disposed below the front part 33. The battery 51 is disposed lower than the front part 33. The entire battery 51 is disposed lower than the lower end 33b. The battery 51 does not overlap the front part 33 in vehicle side view.

At least a part of the first portion 52 is disposed more forward than the front end 31f. The front end 52f is disposed more forward than the front end 31f. For example, the first portion 52 includes a portion disposed more rearward than the front end 31f. The first portion 52 extends from a position more forward than the front end 31f to a position more rearward than the front end 31f. The entire first portion 52 is disposed more forward than the rear end 31r. The first portion 52 is disposed below the housing box 31. The first portion 52 is disposed lower than the housing box 31. At least a part of the first portion 52 is disposed lower than the lower end 31b. For example, the upper end 52t is disposed lower than the lower end 31b. The first portion 52 does not overlap the housing box 31 in vehicle side view.

The first portion 52 is disposed more forward than the rear part 32. At least a part of the first portion 52 is disposed more forward than the entire rear part 32. For example, the entire first portion 52 is disposed more forward than the entire rear part 32. The first portion 52 is disposed lower than the rear part 32. The upper end 52t is disposed lower than the lower end 32b. The first portion 52 does not overlap the rear part 32 in vehicle side view.

At least a part of the first portion 52 is disposed more forward than the front part 33. The first portion 52 includes a portion disposed more forward than the entire front part 33. The front end 52f is disposed more forward than the entire front part 33. The first portion 52 includes a portion disposed below the front part 33. The first portion 52 is disposed lower than the front part 33. The upper end 52t is disposed lower than the lower end 33b. The first portion 52 does not overlap the front part 33 in vehicle side view.

The entire second portion 53 is disposed more forward than the rear end 31r. The rear end 53r is disposed more forward than the rear end 31r. At least a part of the second portion 53 is disposed more rearward than the front end 31f. The rear end 53r is disposed more rearward than the front end 31f. For example, the front end 53f is disposed more rearward than the front end 31f. The second portion 53 is disposed below the housing box 31. The second portion 53 is disposed lower than the housing box 31. Specifically, the second portion 53 includes a portion disposed lower than the lower end 31b. The second portion 53 includes a portion disposed higher than the lower end 31b. The upper end 53t is disposed higher than the lower end 31b. The upper end 53t is disposed more forward than the lower end 31b. The second portion 53 extends from a position lower than the lower end 31b to a position higher than the lower end 31b. The second portion 53 extends from the position lower than the lower end 31b, passes through a position more forward than the rear end 31r, and reaches the position higher than the lower end 31b. The second portion 53 does not overlap the housing box 31 in vehicle side view.

The second portion 53 is disposed in front of the rear part 32. At least a part of the second portion 53 is disposed more forward than the entire rear part 32. The front end 53f is disposed more forward than the entire rear part 32. For example, the rear end 53r is disposed more forward than the entire rear part 32. The second portion 53 is disposed lower than the rear part 32. Specifically, the second portion 53 includes a portion disposed lower than the lower end 32b. The second portion 53 includes a portion disposed higher than the lower end 32b. The upper end 53t is disposed higher than the lower end 32b. The upper end 53t is disposed more forward than the lower end 32b. The second portion 53 extends from a position lower than the lower end 32b to a position higher than the lower end 32b. The second portion 53 extends from the position lower than the lower end 32b, passes through a position in front of the rear part 32, and reaches the position higher than the lower end 32b. The second portion 53 does not overlap the rear part 32 in vehicle side view.

The second portion 53 is disposed below the front part 33. The second portion 53 is disposed lower than the front part 33. The upper end 53t is disposed lower than the lower end 33b. The second portion 53 does not overlap the front part 33 in vehicle side view.

The housing box 31 extends from a position lower than the upper end 53t to a position higher than the upper end 53t. The housing box 31 extends from the position lower than the upper end 53t, passes through a position behind the second portion 53, and reaches the position higher than the upper end 53t. The housing box 31 extends from a position more rearward than the second portion 53 to a position above the second portion 53.

Specifically, the rear part 32 is disposed behind the second portion 53. The rear part 32 is disposed more rearward than the second portion 53. For example, the entire rear part 32 is disposed more rearward than the rear end 53r. At least a part of the rear part 32 is disposed lower than the upper end 53t. The rear part 32 includes a portion disposed lower than the upper end 53t. The lower end 32b is disposed lower than the upper end 53t. The lower end 32b is disposed more rearward than the upper end 53t. The rear part 32 includes a portion disposed higher than the upper end 53t. The rear part 32 extends from a position lower than the upper end 53t to a position higher than the upper end 53t. The rear part 32 extends from the position lower than the upper end 53t, passes through a position behind the second portion 53, and reaches the position higher than the upper end 53t. The front part 33 is disposed above the second portion 53. The lower end 33b is disposed higher than the upper end 53t. The front part 33 extends from a position more rearward than the second portion 53 to a position above the second portion 53. The front part 33 passes through a position above the second portion 53 and extends from a position more rearward than the rear end 53r to a position more forward than the front end 53f.

At least a part of the first cells 55a is disposed more forward than the front end 31f. The first cells 55a include a portion disposed more forward than the front end 31f. For example, the first cells 55a include a portion disposed more rearward than the front end 31f. The first cells 55a extend from a position more forward than the front end 31f to a position more rearward than the front end 31f. The entire first cells 55a are disposed more forward than the rear end 31r. The first cells 55a are disposed below the housing box 31. The first cells 55a are disposed lower than the housing box 31. At least a part of the first cells 55a are disposed lower than the lower end 31b. For example, the entire first cells 55a are disposed lower than the lower end 31b. The first cells 55a do not overlap the housing box 31 in vehicle side view.

The first cells 55a are disposed more forward than the rear part 32. For example, the entire first cells 55a are disposed more forward than the entire rear part 32. The first cells 55a are disposed lower than the rear part 32. At least a part of the first cells 55a is disposed lower than the lower end 32b. The first cells 55a do not overlap the rear part 32 in vehicle side view.

At least a part of the first cells 55a is disposed more forward than the front part 33. The first cells 55a include a portion disposed more forward than the entire front part 33. The first cells 55a include a portion disposed below the front part 33. The first cells 55a are disposed lower than the front part 33. The entire first cells 55a are disposed lower than the lower end 33b. The first cells 55a do not overlap the front part 33 in vehicle side view.

The entire second cells 55b are disposed more forward than the rear end 31r. At least a part of the second cells 55b is disposed more rearward than the front end 31f. For example, the entire second cells 55b are disposed more rearward than the front end 31f. The second cells 55b are disposed below the housing box 31. The second cells 55b are disposed lower than the housing box 31. Specifically, the second cells 55b include a portion disposed lower than the lower end 31b. The second cells 55b include a portion disposed higher than the lower end 31b. The second cells 55b extend from a position lower than the lower end 31b to a position higher than the lower end 31b. The second cells 55b do not overlap the housing box 31 in vehicle side view.

The second cells 55b are disposed in front of the rear part 32. At least a part of the second cells 55b is disposed more forward than the entire rear part 32. For example, the entire second cells 55b are disposed more forward than the entire rear part 32. The second cells 55b are disposed lower than the rear part 32. Specifically, the second cells 55b include a portion disposed lower than the lower end 32b. The second cells 55b include a portion disposed higher than the lower end 32b. The second cells 55b extend from a position lower than the lower end 32b to a position higher than the lower end 32b. The second cells 55b extend from the position lower than the lower end 32b, pass through a position in front of the rear part 32, and reach the position higher than the lower end 32b. The second cells 55b do not overlap the rear part 32 in vehicle side view.

The second cells 55b are disposed below the front part 33. The second cells 55b are disposed lower than the front part 33. The entire second cells 55b are disposed lower than the lower end 33b. The second cells 55b do not overlap the front part 33 in vehicle side view.

At least a part of the electric component 57 is disposed more rearward than the front end 31f. For example, the entire electric component 57 is disposed more rearward than the front end 31f. At least a part of the electric component 57 is disposed more forward than the rear end 31r. For example, the entire electric component 57 is disposed more forward than the rear end 31r. The electric component 57 is disposed below the housing box 31. At least a part of the electric component 57 is disposed higher than the lower end 31b. For example, the entire electric component 57 is disposed higher than the lower end 31b. The electric component 57 does not overlap the housing box 31 in vehicle side view.

The electric component 57 is disposed in front of the rear part 32. The electric component 57 is disposed more forward than the rear part 32. For example, the entire electric component 57 is disposed more forward than the entire rear part 32. At least a part of the electric component 57 is disposed higher than the lower end 32b. For example, the entire electric component 57 is disposed higher than the lower end 32b. The electric component 57 does not overlap the rear part 32 in vehicle side view.

The electric component 57 is disposed below the front part 33. The electric component 57 is disposed lower than the front part 33. At least a part of the electric component 57 is disposed lower than the lower end 33b. For example, the entire electric component 57 is disposed lower than the lower end 33b. The electric component 57 does not overlap the front part 33 in vehicle side view.

The center of gravity G is located more rearward than the front end 31f. The center of gravity G is located more forward than the rear end 31r. The center of gravity G is located below the housing box 31. The center of gravity G is located lower than the housing box 31. The center of gravity G is located lower than the lower end 31b.

The center of gravity G is located more forward than the rear part 32. For example, the center of gravity G is located more forward than the entire rear part 32. The center of gravity G is located lower than the rear part 32. The center of gravity G is located lower than the lower end 32b.

The center of gravity G is located below the front part 33. The center of gravity G is located lower than the front part 33. The center of gravity G is located lower than the lower end 33b.

The battery 51 is disposed more forward than the electric motor 41. For example, the entire battery 51 is disposed more forward than the entire electric motor 41. The battery 51 is disposed at substantially the same height position as the electric motor 41. The battery 51 includes a portion disposed lower than the upper end 41t. The battery 51 includes a portion disposed higher than the upper end 41t. The battery 51 extends from a position lower than the upper end 41t to a position higher than the upper end 41t. The battery 51 does not overlap the electric motor 41 in vehicle side view.

The battery 51 is disposed more forward than the motor body 42. For example, the entire battery 51 is disposed more forward than the entire motor body 42. The battery 51 is disposed at substantially the same height position as the motor body 42. The battery 51 does not overlap the motor body 42 in vehicle side view.

The battery 51 is disposed more forward than the motor shaft 43. For example, the entire battery 51 is disposed more forward than the entire motor shaft 43. The battery 51 is disposed at substantially the same height position as the motor shaft 43. The battery 51 includes a portion disposed lower than the entire motor shaft 43. The battery 51 includes a portion disposed higher than the entire motor shaft 43. The battery 51 extends from a position lower than the entire motor shaft 43 to a position higher than the entire motor shaft 43. The battery 51 does not overlap the motor shaft 43 in vehicle side view.

The battery 51 is disposed more forward than the drive shaft 44. For example, the entire battery 51 is disposed more forward than the entire drive shaft 44. The battery 51 is disposed at substantially the same height position as the drive shaft 44. The battery 51 does not overlap the drive shaft 44 in vehicle side view.

The battery 51 is disposed more forward than the drive sprocket 45. For example, the entire battery 51 is disposed more forward than the entire drive sprocket 45. The battery 51 is disposed at substantially the same height position as the drive sprocket 45. The battery 51 does not overlap the drive sprocket 45 in vehicle side view.

The first portion 52 is disposed more forward than the electric motor 41. For example, the entire first portion 52 is disposed more forward than the entire electric motor 41. The first portion 52 is disposed at substantially the same height position as the electric motor 41. At least a part of the first portion 52 is disposed lower than the upper end 41t. For example, the upper end 52t is disposed lower than the upper end 41t. The first portion 52 does not overlap the electric motor 41 in vehicle side view.

The first portion 52 is disposed more forward than the motor body 42. For example, the entire first portion 52 is disposed more forward than the entire motor body 42. The first portion 52 is disposed at substantially the same height position as the motor body 42. The first portion 52 does not overlap the motor body 42 in vehicle side view.

The first portion 52 is disposed more forward than the motor shaft 43. For example, the entire first portion 52 is disposed more forward than the entire motor shaft 43. The first portion 52 is disposed lower than the motor shaft 43. At least a part of the first portion 52 is disposed lower than the entire motor shaft 43. The lower end 52b of the first portion 52 is disposed lower than the entire motor shaft 43. The upper end 52t of the first portion 52 is disposed at substantially the same height position as the motor shaft 43. The upper end 52t is disposed lower than at least a part of the motor shaft 43. The first portion 52 does not overlap the motor shaft 43 in vehicle side view.

The first portion 52 is disposed more forward than the drive shaft 44. For example, the entire first portion 52 is disposed more forward than the entire drive shaft 44. The first portion 52 is disposed lower than the drive shaft 44. At least a part of the first portion 52 is disposed lower than the entire drive shaft 44. The first portion 52 does not overlap the drive shaft 44 in vehicle side view.

The first portion 52 is disposed more forward than the drive sprocket 45. For example, the entire first portion 52 is disposed more forward than the entire drive sprocket 45. The first portion 52 is disposed lower than the drive sprocket 45. At least a part of the first portion 52 is disposed lower than the entire drive sprocket 45. The first portion 52 does not overlap the drive sprocket 45 in vehicle side view.

The second portion 53 is disposed in front of the electric motor 41. The second portion 53 is disposed more forward than the electric motor 41. For example, the rear end 53r is disposed more forward than the entire electric motor 41. The second portion 53 is disposed at substantially the same height position as the electric motor 41. The second portion 53 includes a portion disposed lower than the upper end 41t. The second portion 53 includes a portion disposed higher than the electric motor 41. The second portion 53 includes a portion disposed higher than the upper end 41t. The upper end 53t is disposed higher than the electric motor 41. The upper end 53t is disposed higher than the upper end 41t. The second portion 53 extends from a position lower than the upper end 41t to a position higher than the upper end 41t. The second portion 53 does not overlap the electric motor 41 in vehicle side view.

The second portion 53 is disposed in front of the motor body 42. The second portion 53 is disposed more forward than the motor body 42. For example, the entire second portion 53 is disposed more forward than the entire motor body 42. The second portion 53 is disposed at substantially the same height position as the motor body 42. The second portion 53 includes a portion disposed higher than the entire motor body 42. The upper end 53t is disposed higher than the entire motor body 42. The second portion 53 does not overlap the motor body 42 in vehicle side view.

The second portion 53 is disposed in front of the motor shaft 43. The second portion 53 is disposed more forward than the motor shaft 43. For example, the entire second portion 53 is disposed more forward than the entire motor shaft 43. The second portion 53 is disposed higher than the motor shaft 43. The second portion 53 includes a portion disposed higher than the entire motor shaft 43. The upper end 53t is disposed higher than the entire motor shaft 43. The second portion 53 does not overlap the motor shaft 43 in vehicle side view.

The second portion 53 is disposed more forward than the drive shaft 44. For example, the rear end 53r is disposed more forward than the entire drive shaft 44. The second portion 53 is disposed at substantially the same height position as the drive shaft 44. The second portion 53 includes a portion disposed higher than the entire drive shaft 44. The upper end 53t is disposed higher than the entire drive shaft 44. The second portion 53 does not overlap the drive shaft 44 in vehicle side view.

The second portion 53 is disposed more forward than the drive sprocket 45. For example, the rear end 53r is disposed more forward than the entire drive sprocket 45. The second portion 53 is disposed at substantially the same height position as the drive sprocket 45. The second portion 53 includes a portion disposed higher than the entire drive sprocket 45. The upper end 53t is disposed higher than the entire drive sprocket 45. The second portion 53 does not overlap the drive sprocket 45 in vehicle side view.

The first cells 55a are disposed more forward than the electric motor 41. For example, the entire first cells 55a are disposed more forward than the entire electric motor 41. The first cells 55a are disposed at substantially the same height position as the electric motor 41. At least a part of the first cells 55a is disposed lower than the upper end 41t. For example, the entire first cells 55a are disposed lower than the upper end 41t. The first cells 55a do not overlap the electric motor 41 in vehicle side view.

The first cells 55a are disposed more forward than the motor body 42. For example, the entire first cells 55a are disposed more forward than the entire motor body 42. The first cells 55a are disposed at substantially the same height position as the motor body 42. The first cells 55a do not overlap the motor body 42 in vehicle side view.

The first cells 55a are disposed more forward than the motor shaft 43. For example, the entire first cells 55a are disposed more forward than the entire motor shaft 43. The first cells 55a are disposed lower than the motor shaft 43. At least a part of the first portions 52 are disposed lower than the entire motor shaft 43. The first cells 55a do not overlap the motor shaft 43 in vehicle side view.

The first cells 55a are disposed more forward than the drive shaft 44. For example, the entire first cells 55a are disposed more forward than the entire drive shaft 44. The first cells 55a are disposed lower than the drive shaft 44. At least a part of the first cells 55a is disposed lower than the entire drive shaft 44. The first cells 55a do not overlap the drive shaft 44 in vehicle side view.

The first cells 55a are disposed more forward than the drive sprocket 45. For example, the entire first cells 55a are disposed more forward than the entire drive sprocket 45. The first cells 55a are disposed lower than the drive sprocket 45. At least a part of the first cells 55a is disposed lower than the entire drive sprocket 45. The first cells 55a do not overlap the drive sprocket 45 in vehicle side view.

The second cells 55b are disposed in front of the electric motor 41. The second cells 55b are disposed more forward than the electric motor 41. For example, the entire second cells 55b are disposed more forward than the entire electric motor 41. The second cells 55b are disposed at substantially the same height position as the electric motor 41. The second cells 55b include a portion disposed higher than the upper end 41t. The second cells 55b do not overlap the electric motor 41 in vehicle side view.

The second cells 55b are disposed in front of the motor body 42. The second cells 55b are disposed more forward than the motor body 42. For example, the entire second cells 55b are disposed more forward than the entire motor body 42. The second cells 55b are disposed at substantially the same height position as the motor body 42. The second cells 55b include a portion disposed higher than the entire motor body 42. The second cells 55b do not overlap the motor body 42 in vehicle side view.

The second cells 55b are disposed in front of the motor shaft 43. The second cells 55b are disposed more forward than the motor shaft 43. For example, the entire second cells 55b are disposed more forward than the entire motor shaft 43. The second cells 55b are disposed at substantially the same height position as the motor shaft 43. The second cells 55b include a portion disposed higher than the entire motor shaft 43. The second cells 55b do not overlap the motor shaft 43 in vehicle side view.

The second cells 55b are disposed more forward than the drive shaft 44. For example, the entire second cells 55b are disposed more forward than the entire drive shaft 44. The second cells 55b are disposed at substantially the same height position as the drive shaft 44. The second cells 55b include a portion disposed higher than the entire drive shaft 44. The second portion 53 does not overlap the drive shaft 44 in vehicle side view.

The second cells 55b are disposed more forward than the drive sprocket 45. For example, the entire second cells 55b are disposed more forward than the entire drive sprocket 45. The second cells 55b are disposed at substantially the same height position as the drive sprocket 45. The second cells 55b include a portion disposed higher than the entire drive sprocket 45. The second portion 53 does not overlap the drive sprocket 45 in vehicle side view.

The electric component 57 is disposed more forward than the electric motor 41. For example, the entire electric component 57 is disposed more forward than the entire electric motor 41. The electric component 57 is disposed higher than the electric motor 41. At least a part of the electric component 57 is disposed higher than the upper end 41t. For example, the entire electric component 57 is disposed higher than the upper end 41t. The electric component 57 does not overlap the electric motor 41 in vehicle side view.

The electric component 57 is disposed more forward than the motor body 42. For example, the entire electric component 57 is disposed more forward than the entire motor body 42. The electric component 57 is disposed higher than the motor body 42. For example, the entire electric component 57 is disposed higher than the entire motor body 42. The electric component 57 does not overlap the motor body 42 in vehicle side view.

The electric component 57 is disposed more forward than the motor shaft 43. For example, the entire electric component 57 is disposed more forward than the entire motor shaft 43. The electric component 57 is disposed higher than the motor shaft 43. For example, the entire electric component 57 is disposed higher than the entire motor shaft 43. The electric component 57 does not overlap the motor shaft 43 in vehicle side view.

The electric component 57 is disposed more forward than the drive shaft 44. For example, the entire electric component 57 is disposed more forward than the entire drive shaft 44. The electric component 57 is disposed higher than the drive shaft 44. For example, the entire electric component 57 is disposed higher than the entire drive shaft 44. The electric component 57 does not overlap the drive shaft 44 in vehicle side view.

The electric component 57 is disposed more forward than the drive sprocket 45. For example, the entire electric component 57 is disposed more forward than the entire drive sprocket 45. The electric component 57 is disposed higher than the drive sprocket 45. For example, the entire electric component 57 is disposed higher than the entire drive sprocket 45. The electric component 57 does not overlap the drive sprocket 45 in vehicle side view.

The center of gravity G is located in front of the electric motor 41. The center of gravity G is located more forward than the electric motor 41. For example, the center of gravity G is located more forward than the entire electric motor 41. The center of gravity G is located at substantially the same height position as the electric motor 41. The center of gravity G does not overlap the electric motor 41 in vehicle side view.

The center of gravity G is located in front of the motor body 42. The center of gravity G is located more forward than the motor body 42. The center of gravity G is located more forward than the entire motor body 42. The center of gravity G is located at substantially the same height position as the motor body 42. The center of gravity G does not overlap the motor body 42 in vehicle side view.

The center of gravity G is located in front of the motor shaft 43. The center of gravity G is located more forward than the motor shaft 43. The center of gravity G is located more forward than the entire motor shaft 43. The center of gravity G is located lower than the motor shaft 43. The center of gravity G is located lower than at least a part of the motor shaft 43. For example, the center of gravity G is located lower than the entire motor shaft 43. The center of gravity G does not overlap the motor shaft 43 in vehicle side view.

The center of gravity G is located more forward than the drive shaft 44. For example, the center of gravity G is disposed more forward than the entire drive shaft 44. The center of gravity G is located lower than the drive shaft 44. The center of gravity G is located lower than at least a part of the drive shaft 44. For example, the center of gravity G is located lower than the entire drive shaft 44. The center of gravity G does not overlap the drive shaft 44 in vehicle side view.

The center of gravity G is located more forward than the drive sprocket 45. For example, the center of gravity G is located more forward than the entire drive sprocket 45. The center of gravity G is located at substantially the same height position as the drive sprocket 45. The center of gravity G does not overlap the drive sprocket 45 in vehicle side view.

Refer to Fig. 3. The seat 21 overlaps the vehicle body frame 11 in vehicle plan view. For example, the seat 21 overlaps the lower frame 14 in vehicle plan view. The seat 21 overlaps the seat frame 15 in vehicle plan view.

The rear axle 28 does not overlap the vehicle body frame 11 in vehicle plan view. The rear axle 28 is disposed more leftward than the right seat frame 15R and more rightward than the left seat frame 15L.

The rear wheel 29 does not overlap the vehicle body frame 11 in vehicle plan view. The rear wheel 29 is disposed more leftward than the right seat frame 15R and more rightward than the left seat frame 15L.

The foot board 22 overlaps the vehicle body frame 11 in vehicle plan view. For example, the foot board 22 overlaps the right lower frame 14R in vehicle plan view. The foot board 22 overlaps the left lower frame 14L in vehicle plan view. The foot board 22 extends from the right lower frame 14R to the left lower frame 14L.

For example, the right portion 23 is disposed more rightward than the down frame 13. The right portion 23 overlaps the right lower frame 14R in vehicle plan view. The left portion 24 is disposed more leftward than the down frame 13. The left portion 24 overlaps the left lower frame 14L in vehicle plan view. The central portion 25 is disposed behind the down frame 13. The central portion 25 is disposed leftward of the right lower frame 14R and rightward of the left lower frame 14L. The central portion 25 does not substantially overlap the vehicle body frame 11 in vehicle plan view.

Refer to Fig. 4. The right portion 23 is disposed above the right lower frame 14R. The left portion 24 is disposed above the left lower frame 14L.

Refer to Fig. 3. The housing box 31 is disposed leftward of the right seat frame 15R and rightward of the left seat frame 15L. For example, the housing box 31 does not include a portion overlapping the vehicle body frame 11 in vehicle plan view. Alternatively, the housing box 31 may include a portion overlapping the vehicle body frame 11 in vehicle plan view.

The rear part 32 is disposed leftward of the right seat frame 15R and rightward of the left seat frame 15L. For example, the rear part 32 does not overlap the vehicle body frame 11 in vehicle plan view.

The front part 33 is disposed leftward of the right seat frame 15R and rightward of the left seat frame 15L. For example, the front part 33 does not overlap the vehicle body frame 11 in vehicle plan view.

The electric motor 41 is disposed leftward of the right seat frame 15R and rightward of the left seat frame 15L. For example, the electric motor 41 does not overlap the vehicle body frame 11 in vehicle plan view.

The motor body 42 is disposed leftward of the right seat frame 15R and rightward of the left seat frame 15L. For example, the motor body 42 does not overlap the vehicle body frame 11 in vehicle plan view.

The motor shaft 43 is disposed leftward of the right seat frame 15R and rightward of the left seat frame 15L. For example, the motor shaft 43 does not overlap the vehicle body frame 11 in vehicle plan view.

The drive shaft 44 is disposed leftward of the right seat frame 15R and rightward of the left seat frame 15L. For example, the drive shaft 44 does not overlap the vehicle body frame 11 in vehicle plan view.

The drive sprocket 45 is disposed leftward of the right seat frame 15R and rightward of the left seat frame 15L. For example, the drive sprocket 45 does not overlap the vehicle body frame 11 in vehicle plan view.

The battery 51 is disposed behind the down frame 13. The battery 51 is disposed leftward of the right lower frame 14R and rightward of the left lower frame 14L. For example, the battery 51 does not include a portion overlapping the vehicle body frame 11 in vehicle plan view. Alternatively, the battery 51 may include a portion overlapping the vehicle body frame 11 in vehicle plan view.

The first portion 52 is disposed behind the down frame 13. The first portion 52 is disposed leftward of the right lower frame 14R and rightward of the left lower frame 14L. For example, the first portion 52 does not overlap the vehicle body frame 11 in vehicle plan view.

The second portion 53 is disposed leftward of the right lower frame 14R and rightward of the left lower frame 14L. For example, the second portion 53 does not overlap the vehicle body frame 11 in vehicle plan view.

The first cells 55a are disposed leftward of the right lower frame 14R and rightward of the left lower frame 14L. For example, the first cells 55a do not overlap the vehicle body frame 11 in vehicle plan view.

The second cells 55b are disposed leftward of the right lower frame 14R and rightward of the left lower frame 14L. For example, the second cells 55b do not overlap the vehicle body frame 11 in vehicle plan view.

The electric component 57 is disposed leftward of the right lower frame 14R and rightward of the left lower frame 14L. For example, the electric component 57 does not overlap the vehicle body frame 11 in vehicle plan view.

The foot board 22 overlaps the seat 21 in vehicle plan view.

The right portion 23 overlaps the seat 21 in vehicle plan view. The central portion 25 overlaps the seat 21 in vehicle plan view. The left portion 24 overlaps the seat 21 in vehicle plan view.

The rear axle 28 does not overlap the seat 21 in vehicle plan view.

The rear wheel 29 overlaps the seat 21 in vehicle plan view.

The housing box 31 overlaps the seat 21 in vehicle plan view. The entire housing box 31 overlaps the seat 21 in vehicle plan view.

The rear part 32 overlaps the seat 21 in vehicle plan view. The entire rear part 32 overlaps the seat 21 in vehicle plan view.

The front part 33 overlaps the seat 21 in vehicle plan view. The entire front part 33 overlaps the seat 21 in vehicle plan view.

The electric motor 41 overlaps the seat 21 in vehicle plan view. The entire electric motor 41 overlaps the seat 21 in vehicle plan view.

The motor body 42 overlaps the seat 21 in vehicle plan view. The entire motor body 42 overlaps the seat 21 in vehicle plan view.

The motor shaft 43 overlaps the seat 21 in vehicle plan view. The entire motor shaft 43 overlaps the seat 21 in vehicle plan view.

The drive shaft 44 overlaps the seat 21 in vehicle plan view. The entire drive shaft 44 overlaps the seat 21 in vehicle plan view.

The drive sprocket 45 overlaps the seat 21 in vehicle plan view. The entire drive sprocket 45 overlaps the seat 21 in vehicle plan view.

The battery 51 overlaps the seat 21 in vehicle plan view.

The first portion 52 overlaps the seat 21 in vehicle plan view. The first portion 52 includes a portion overlapping the seat 21 in vehicle plan view. The first portion 52 includes a portion that does not overlap the seat 21 in vehicle plan view.

The second portion 53 overlaps the seat 21 in vehicle plan view. At least a part of the second portion 53 overlaps the seat 21 in vehicle plan view. For example, the entire second portion 53 overlaps the seat 21 in vehicle plan view.

The first cells 55a overlap the seat 21 in vehicle plan view. The first cells 55a include a portion overlapping the seat 21 in vehicle plan view. The first cells 55a include a portion that does not overlap the seat 21 in vehicle plan view.

The second cells 55b overlap the seat 21 in vehicle plan view. The entire second cells 55b overlap the seat 21 in vehicle plan view.

The electric component 57 overlaps the seat 21 in vehicle plan view. The entire electric component 57 overlaps the seat 21 in vehicle plan view.

The rear axle 28 is disposed more leftward than the right portion 23 and more rightward than the left portion 24. The rear axle 28 does not overlap the foot board 22 in vehicle plan view.

The rear wheel 29 is disposed more leftward than the right portion 23 and more rightward than the left portion 24. The rear wheel 29 does not overlap the foot board 22 in vehicle plan view.

The housing box 31 is disposed leftward of right portion 23 and rightward of the left portion 24. The housing box 31 is disposed behind the central portion 25. For example, the housing box 31 includes a portion overlapping the foot board 22 in vehicle plan view. Alternatively, the housing box 31 may not include a portion overlapping the foot board 22 in vehicle plan view.

The rear part 32 is disposed leftward of the right portion 23 and rightward of the left portion 24. The rear part 32 is disposed more rearward than the rear end 23r of the right portion 23. The rear part 32 is disposed more rearward than the rear end 24r of the left portion 24. For example, the rear part 32 does not overlap the foot board 22 in vehicle plan view.

The front part 33 is disposed leftward of the right portion 23 and rightward of the left portion 24. The front part 33 is disposed behind the central portion 25. The front part 33 is disposed more forward than the rear end 23r of the right portion 23. The front part 33 is disposed more forward than the rear end 24r of the left portion 24. For example, the front part 33 does not overlap the foot board 22 in vehicle plan view.

The electric motor 41 is disposed more leftward than the right portion 23 and more rightward than the left portion 24. The electric motor 41 does not overlap the foot board 22 in vehicle plan view.

The motor body 42 is disposed more leftward than the right portion 23 and more rightward than the left portion 24. The motor body 42 does not overlap the foot board 22 in vehicle plan view.

The motor shaft 43 is disposed more leftward than the right portion 23 and more rightward than the left portion 24. The motor shaft 43 does not overlap the foot board 22 in vehicle plan view.

The drive shaft 44 is disposed more leftward than the right portion 23 and more rightward than the left portion 24. The drive shaft 44 does not overlap the foot board 22 in vehicle plan view.

The drive sprocket 45 is disposed more leftward than the right portion 23 and more rightward than the left portion 24. The drive sprocket 45 does not overlap the foot board 22 in vehicle plan view.

The battery 51 overlaps the foot board 22 in vehicle plan view. The battery 51 is disposed leftward of the right portion 23 and rightward of the left portion 24. The battery 51 overlaps the central portion 25 in vehicle plan view.

The first portion 52 overlaps the foot board 22 in vehicle plan view. At least a part of the first portion 52 overlaps the foot board 22 in vehicle plan view. For example, the entire first portion 52 overlaps the foot board 22 in vehicle plan view. The first portion 52 is disposed leftward of the right portion 23 and rightward of the left portion 24. The first portion 52 includes a portion overlapping the central portion 25 in vehicle plan view.

The second portion 53 is disposed leftward of the right portion 23 and rightward of the left portion 24. The second portion 53 is disposed behind the central portion 25. At least a part of the second portion 53 is disposed more forward than the rear end 23r. For example, the rear end 53r is disposed more forward than the rear end 23r. At least a part of the second portion 53 is disposed more forward than the rear end 24r. For example, the rear end 53r is disposed more forward than the rear end 24r. The second portion 53 does not overlap the foot board 22 in vehicle plan view.

The first cells 55a overlap the foot board 22 in vehicle plan view. The first cells 55a are disposed leftward of the right portion 23 and rightward of the left portion 24. The first cells 55a include a portion overlapping the central portion 25 in vehicle plan view.

The second cells 55b are disposed leftward of the right portion 23 and rightward of the left portion 24. The second cells 55b are disposed behind the central portion 25. At least a part of the second cells 55b is disposed more forward than the rear end 23r. For example, the entire second cells 55b are disposed more forward than the rear end 23r. At least a part of the second cells 55b is disposed more forward than the rear end 24r. For example, the entire second cells 55b are disposed more forward than the rear end 24r. The second cells 55b do not overlap the foot board 22 in vehicle plan view.

The electric component 57 is disposed leftward of the right portion 23 and rightward of the left portion 24. The electric component 57 is disposed behind the central portion 25. At least a part of the electric component 57 is disposed more forward than the rear end 23r. For example, the entire electric component 57 is disposed more forward than the rear end 23r. At least a part of the electric component 57 is disposed more forward than the rear end 24r. For example, the entire electric component 57 is disposed more forward than the rear end 24r. The electric component 57 does not overlap the foot board 22 in vehicle plan view.

Refer to Fig. 4. The first portion 52 is disposed below the foot board 22. For example, the first portion 52 is disposed below the central portion 25.

The first cells 55a are disposed below the foot board 22. For example, the first cells 55a are disposed below the central portion 25.

Refer to Fig. 3. The housing box 31 does not overlap the rear axle 28 in vehicle plan view. The rear part 32 does not overlap the rear axle 28 in vehicle plan view. The front part 33 does not overlap the rear axle 28 in vehicle plan view.

The electric motor 41 does not overlap the rear axle 28 in vehicle plan view. The motor body 42 does not overlap the rear axle 28 in vehicle plan view. The motor shaft 43 does not overlap the rear axle 28 in vehicle plan view.

The drive shaft 44 does not overlap the rear axle 28 in vehicle plan view.

The drive sprocket 45 does not overlap the rear axle 28 in vehicle plan view.

The battery 51 does not overlap the rear axle 28 in vehicle plan view. The first portion 52 does not overlap the rear axle 28 in vehicle plan view. The second portion 53 does not overlap the rear axle 28 in vehicle plan view. The first cells 55a do not overlap the rear axle 28 in vehicle plan view. The second cells 55b do not overlap the rear axle 28 in vehicle plan view. The electric component 57 does not overlap the rear axle 28 in vehicle plan view.

The housing box 31 overlaps the rear wheel 29 in vehicle plan view. The rear part 32 overlaps the rear wheel 29 in vehicle plan view. The front part 33 does not overlap the rear wheel 29 in vehicle plan view.

The electric motor 41 does not overlap the rear wheel 29 in vehicle plan view. The motor body 42 does not overlap the rear wheel 29 in vehicle plan view. The motor shaft 43 does not overlap the rear wheel 29 in vehicle plan view.

The drive shaft 44 does not overlap the rear wheel 29 in vehicle plan view.

The drive sprocket 45 does not overlap the rear wheel 29 in vehicle plan view.

The battery 51 does not overlap the rear wheel 29 in vehicle plan view. The first portion 52 does not overlap the rear wheel 29 in vehicle plan view. The second portion 53 does not overlap the rear wheel 29 in vehicle plan view. The first cells 55a do not overlap the rear wheel 29 in vehicle plan view. The second cells 55b do not overlap the rear wheel 29 in vehicle plan view. The electric component 57 does not overlap the rear wheels 29 in vehicle plan view.

The electric motor 41 overlaps the housing box 31 in vehicle plan view. For example, the entire electric motor 41 overlaps the housing box 31 in vehicle plan view.

The electric motor 41 overlaps the rear part 32 in vehicle plan view. For example, the entire electric motor 41 overlaps the rear part 32 in vehicle plan view. The electric motor 41 does not overlap the front part 33 in vehicle plan view.

The motor body 42 overlaps the housing box 31 in vehicle plan view. For example, the entire motor body 42 overlaps the housing box 31 in vehicle plan view.

The motor body 42 overlaps the rear part 32 in vehicle plan view. For example, the entire motor body 42 overlaps the rear part 32 in vehicle plan view. The motor body 42 does not overlap the front part 33 in vehicle plan view.

The motor shaft 43 overlaps the housing box 31 in vehicle plan view. For example, the entire motor shaft 43 overlaps the housing box 31 in vehicle plan view.

The motor shaft 43 overlaps the rear part 32 in vehicle plan view. For example, the entire motor shaft 43 overlaps the rear part 32 in vehicle plan view. The motor shaft 43 does not overlap the front part 33 in vehicle plan view.

The drive shaft 44 overlaps the housing box 31 in vehicle plan view. For example, the entire drive shaft 44 overlaps the housing box 31 in vehicle plan view.

The drive shaft 44 overlaps the rear part 32 in vehicle plan view. For example, the entire drive shaft 44 overlaps the rear part 32 in vehicle plan view. The drive shaft 44 does not overlap the front part 33 in vehicle plan view.

The drive sprocket 45 overlaps the housing box 31 in vehicle plan view. For example, the entire drive sprocket 45 overlaps the housing box 31 in vehicle plan view.

The drive sprocket 45 overlaps the rear part 32 in vehicle plan view. For example, the entire drive sprocket 45 overlaps the rear part 32 in vehicle plan view. The drive sprocket 45 does not overlap the front part 33 in vehicle plan view.

The battery 51 overlaps the housing box 31 in vehicle plan view. The battery 51 includes a portion overlapping the housing box 31 in vehicle plan view. The battery 51 includes a portion that does not overlap the housing box 31 in vehicle plan view.

The battery 51 overlaps the front part 33 in vehicle plan view. For example, the battery 51 does not overlap the rear part 32 in vehicle plan view. Alternatively, the battery 51 may overlap the rear part 32 in vehicle plan view.

The first portion 52 overlaps the housing box 31 in vehicle plan view. The first portion 52 includes a portion overlapping the housing box 31 in vehicle plan view. The first portion 52 includes a portion that does not overlap the housing box 31 in vehicle plan view.

The first portion 52 overlaps the front part 33 in vehicle plan view. For example, the first portion 52 does not overlap the rear part 32 in vehicle plan view. Alternatively, the first portion 52 may overlap the rear part 32 in vehicle plan view.

The second portion 53 overlaps the housing box 31 in vehicle plan view. For example, the entire second portion 53 overlaps the housing box 31 in vehicle plan view.

The second portion 53 overlaps the front part 33 in vehicle plan view. For example, the entire second portion 53 overlaps the front part 33 in vehicle plan view. For example, the second portion 53 does not overlap the rear part 32 in vehicle plan view. Alternatively, the second portion 53 may overlap the rear part 32 in vehicle plan view.

The first cells 55a overlap the housing box 31 in vehicle plan view. The first cells 55a include a portion overlapping the housing box 31 in vehicle plan view. The first cells 55a include a portion that does not overlap the housing box 31 in vehicle plan view.

The first cells 55a overlap the front part 33 in vehicle plan view. For example, the first cells 55a do not overlap the rear part 32 in vehicle plan view. Alternatively, the first cells 55a may overlap the rear part 32 in vehicle plan view.

The second cells 55b overlap the housing box 31 in vehicle plan view. For example, the entire second cells 55b overlap the housing box 31 in vehicle plan view.

The second cells 55b overlap the front part 33 in vehicle plan view. For example, the entire second cells 55b overlap the front part 33 in vehicle plan view. For example, the second cells 55b do not overlap the rear part 32 in vehicle plan view. Alternatively, the second cells 55b may overlap the rear part 32 in vehicle plan view.

The electric component 57 overlaps the housing box 31 in vehicle plan view. For example, the entire electric component 57 overlaps the housing box 31 in vehicle plan view.

The electric component 57 overlaps the front part 33 in vehicle plan view. For example, the entire electric component 57 overlaps the front part 33 in vehicle plan view. For example, the electric component 57 does not overlap the rear part 32 in vehicle plan view. Alternatively, the electric component 57 may overlap the rear part 32 in vehicle plan view.

The battery 51 does not overlap the electric motor 41 in vehicle plan view. The battery 51 does not overlap the motor body 42 in vehicle plan view. The battery 51 does not overlap the motor shaft 43 in vehicle plan view. The battery 51 does not overlap the drive shaft 44 in vehicle plan view. The battery 51 does not overlap the drive sprocket 45 in vehicle plan view.

The first portion 52 does not overlap the electric motor 41 in vehicle plan view. The first portion 52 does not overlap the motor body 42 in vehicle plan view. The first portion 52 does not overlap the motor shaft 43 in vehicle plan view. The first portion 52 does not overlap the drive shaft 44 in vehicle plan view. The first portion 52 does not overlap the drive sprocket 45 in vehicle plan view.

The second portion 53 does not overlap the electric motor 41 in vehicle plan view. The second portion 53 does not overlap the motor body 42 in vehicle plan view. The second portion 53 does not overlap the motor shaft 43 in vehicle plan view. The second portion 53 does not overlap the drive shaft 44 in vehicle plan view. The second portion 53 does not overlap the drive sprocket 45 in vehicle plan view.

The first cells 55a do not overlap the electric motor 41 in vehicle plan view. The first cells 55a do not overlap the motor body 42 in vehicle plan view. The first cells 55a do not overlap the motor shaft 43 in vehicle plan view. The first cells 55a do not overlap the drive shaft 44 in vehicle plan view. The first cells 55a do not overlap the drive sprocket 45 in vehicle plan view.

The second cells 55b do not overlap the electric motor 41 in vehicle plan view. The second cells 55b do not overlap the motor body 42 in vehicle plan view. The second cells 55b do not overlap the motor shaft 43 in vehicle plan view. The second cells 55b do not overlap the drive shaft 44 in vehicle plan view. The second cells 55b do not overlap the drive sprocket 45 in vehicle plan view.

The electric component 57 does not overlap the electric motor 41 in vehicle plan view. The electric component 57 does not overlap the motor body 42 in vehicle plan view. The electric component 57 does not overlap the motor shaft 43 in vehicle plan view. The electric component 57 does not overlap the drive shaft 44 in vehicle plan view. The electric component 57 does not overlap the drive sprocket 45 in vehicle plan view.

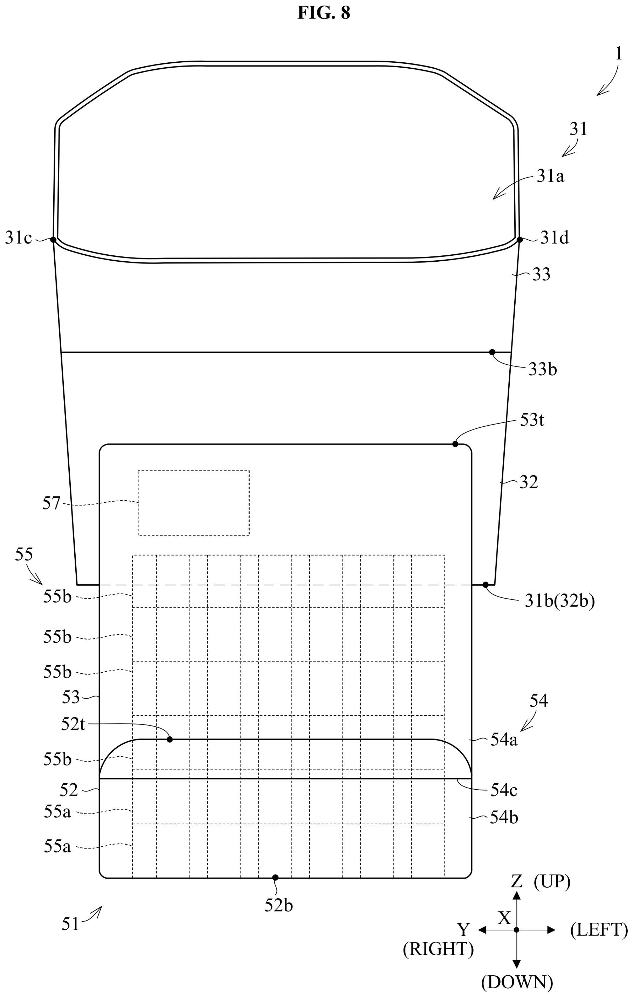

Fig. 8 is a front view of the housing box 31 and the battery 51. The battery 51 overlaps the housing box 31 in vehicle front view. The battery 51 overlaps the rear part 32 in vehicle front view. The battery 51 does not overlap the front part 33 in vehicle front view.

The housing box 31 has the right end 31c and the left end 31d. The left end 31d is disposed more leftward than the right end 31c. At least a part of the battery 51 is disposed leftward of the right end 31c and rightward of the left end 31d. For example, the entire battery 51 is disposed leftward of the right end 31c and rightward of the left end 31d.

The first portion 52 does not overlap the housing box 31 in vehicle front view. The first portion 52 does not overlap the rear part 32 in vehicle front view. The first portion 52 does not overlap the front part 33 in vehicle front view.

At least a part of the first portion 52 is disposed leftward of the right end 31c and rightward of the left end 31d. For example, the entire first portion 52 is disposed leftward of the right end 31c and rightward of the left end 31d.

The second portion 53 overlaps the housing box 31 in vehicle front view. The second portion 53 overlaps the rear part 32 in vehicle front view. The second portion 53 does not overlap the front part 33 in vehicle front view.

At least a part of the second portion 53 is disposed leftward of the right end 31c and rightward of the left end 31d. For example, the entire second portion 53 is disposed leftward of the right end 31c and rightward of the left end 31d.

The first cells 55a do not overlap the housing box 31 in vehicle front view. The first cells 55a do not overlap the rear part 32 in vehicle front view. The first cells 55a do not overlap the front part 33 in vehicle front view.

At least a part of the first cells 55a is disposed leftward of the right end 31c and rightward of the left end 31d. For example, the entire first cells 55a are disposed leftward of the right end 31c and rightward of the left end 31d.

The second cells 55b overlap the housing box 31 in vehicle front view. The second cells 55b overlap the rear part 32 in vehicle front view. The second cells 55b do not overlap the front part 33 in vehicle front view.

At least a part of the second cells 55b is disposed leftward of the right end 31c and rightward of the left end 31d. For example, the entire second cells 55b are disposed leftward of the right end 31c and rightward of the left end 31d.

The electric component 57 overlaps the housing box 31 in vehicle front view. The entire electric component 57 overlaps the housing box 31 in vehicle front view. The electric component 57 overlaps the rear part 32 in vehicle front view. The entire electric component 57 overlaps the rear part 32 in vehicle front view. The electric component 57 does not overlap the front part 33 in vehicle front view.

At least a part of the electric component 57 is disposed leftward of the right end 31c and rightward of the left end 31d. For example, the entire electric component 57 is disposed leftward of the right end 31c and rightward of the left end 31d.

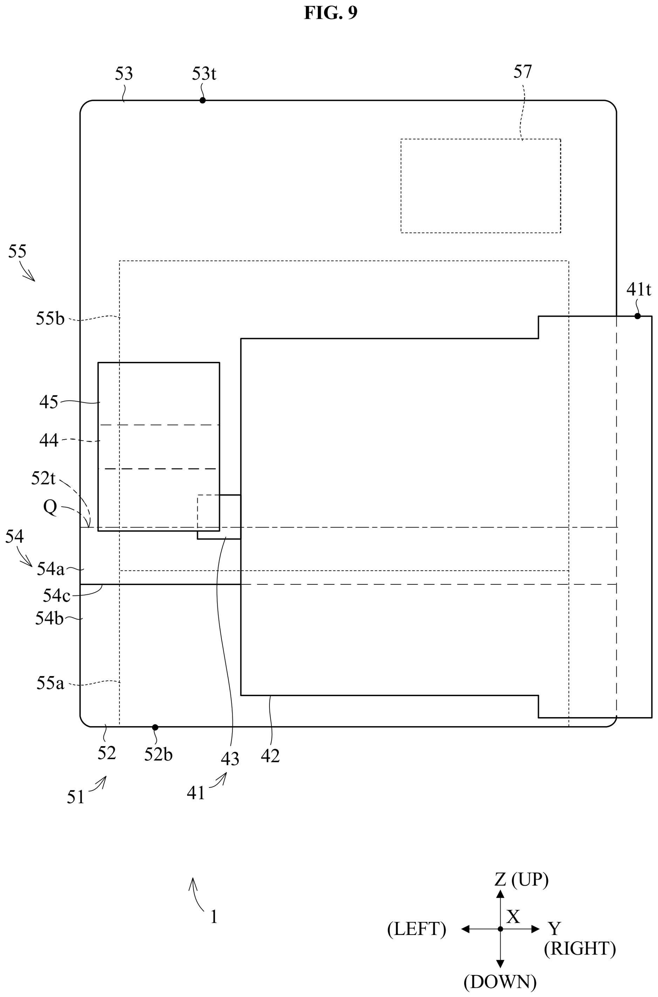

Fig. 9 is a rear view of the electric motor 41 and the battery 51. For convenience, Fig. 9 does not illustrate an outline of each first cell 55a, and illustrates only an entire outline of the plurality of first cells 55a. Fig. 9 does not illustrate an outline of each second cell 55b, and illustrates only an entire outline of the plurality of second cells 55b. The battery 51 overlaps the electric motor 41 in vehicle rear view. The battery 51 overlaps the motor body 42 in vehicle rear view. The battery 51 overlaps the motor shaft 43 in vehicle rear view. The battery 51 overlaps the drive shaft 44 in vehicle rear view. The battery 51 overlaps the drive sprocket 45 in vehicle rear view.

The virtual plane Q overlaps the electric motor 41 in vehicle rear view. The virtual plane Q overlaps the motor body 42 in vehicle rear view. The virtual plane Q overlaps the motor shaft 43 in vehicle rear view. The virtual plane Q does not overlap the drive shaft 44 in vehicle rear view. The virtual plane Q is disposed lower than the entire drive shaft 44 in vehicle rear view. The virtual plane Q overlaps the drive sprocket 45 in vehicle rear view.

The first portion 52 overlaps the electric motor 41 in vehicle rear view. The first portion 52 overlaps the motor body 42 in vehicle rear view. The first portion 52 overlaps the motor shaft 43 in vehicle rear view. The first portion 52 does not overlap the drive shaft 44 in vehicle rear view. The first portion 52 overlaps the drive sprocket 45 in vehicle rear view.

The second portion 53 overlaps the electric motor 41 in vehicle rear view. The second portion 53 overlaps the motor body 42 in vehicle rear view. The second portion 53 overlaps the motor shaft 43 in vehicle rear view. The second portion 53 overlaps the drive shaft 44 in vehicle rear view. The second portion 53 overlaps the drive sprocket 45 in vehicle rear view.

The first cells 55a overlap the electric motor 41 in vehicle rear view. The first cells 55a overlap the motor body 42 in vehicle rear view. The first cells 55a do not overlap the motor shaft 43 in vehicle rear view. The first cells 55a do not overlap the drive shaft 44 in vehicle rear view. The first cells 55a do not overlap the drive sprocket 45 in vehicle rear view.

The second cells 55b overlap the electric motor 41 in vehicle rear view. The second cells 55b overlap the motor body 42 in vehicle rear view. The second cells 55b overlap the motor shaft 43 in vehicle rear view. The second cells 55b overlap the drive shaft 44 in vehicle rear view. The second cells 55b overlap the drive sprocket 45 in vehicle rear view.

The electric component 57 does not overlap the electric motor 41 in vehicle rear view. The electric component 57 does not overlap the motor body 42 in vehicle rear view. The electric component 57 does not overlap the motor shaft 43 in vehicle rear view. The electric component 57 does not overlap the drive shaft 44 in vehicle rear view. The electric component 57 does not overlap the drive sprocket 45 in vehicle rear view.

### 8. Effects of Embodiment

The straddled electric vehicle 1 includes a vehicle body frame 11, a seat 21, a foot board 22, a housing box 31, an electric motor 41, and a battery 51. At least a part of the foot board 22 is disposed more forward than and lower than the seat 21. The housing box 31 is supported by the vehicle body frame 11. The housing box 31 is disposed below the seat 21. The electric motor 41 is disposed below the housing box 31. The electric motor 41 overlaps the housing box 31 in vehicle plan view. The battery 51 supplies electric power to the electric motor 41.

The battery 51 includes a first portion 52 and a second portion 53. The first portion 52 is disposed below the foot board 22. The second portion 53 extends upward from the first portion 52. The second portion 53 is disposed below the seat 21. The second portion 53 is disposed in front of the electric motor 41. Therefore, an entire of the first portion 52 and the second portion 53 has a large size. Thus, the battery 51 has a large size. Therefore, the battery 51 has a large capacity.

Further, the housing box 31 has a lower end 31b. The second portion 53 has an upper end 53t. The upper end 53t of the second portion 53 is disposed higher than the lower end 31b of the housing box 31. Therefore, the size of the second portion 53 is even larger. Therefore, the size of the battery 51 is even larger. Therefore, the capacity of the battery 51 is even larger.

In summary, the straddled electric vehicle 1 is equipped with the battery 51 having a large capacity.

As described above, the first portion 52 is disposed below the foot board 22. Therefore, it is easy to improve the comfort of the straddled electric vehicle 1. For example, it is easy to improve the stability of the straddled electric vehicle 1.

The second portion 53 overlaps the housing box 31 in vehicle front view. Therefore, the size of the second portion 53 is even larger. Therefore, the size of the battery 51 is even larger. Therefore, the capacity of the battery 51 is even larger.

The battery 51 includes a plurality of first cells 55a and a plurality of second cells 55b. The first cells 55a are installed in the first portion 52. The second cells 55b are installed in the second portion 53. The capacity of the battery 51 is the sum of the capacity of the first cells 55a and the capacity of the second cells 55b. Therefore, the capacity of the battery 51 is large.

The second cells 55b include a portion disposed higher than the lower end 31b of the housing box 31. Therefore, the size of the second cells 55b is even larger. Therefore, the capacity of the second cells 55b is even larger. Therefore, the capacity of the battery 51 is even larger.

The upper end 53t of the second portion 53 is disposed higher than the electric motor 41. Therefore, the size of the second portion 53 is even larger. Therefore, the size of the battery 51 is even larger. Therefore, the capacity of the battery 51 is even larger.

The upper end 53t of the second portion 53 is disposed higher than the foot board 22. Therefore, the size of the second portion 53 is even larger. Therefore, the size of the battery 51 is even larger. Therefore, the capacity of the battery 51 is even larger.

The first portion 52 has an upper end 52t and a lower end 52b. The length Lz is a length in the up-down direction Z between the upper end 53t of the second portion 53 and the upper end 52t of the first portion 52. The length Kz is a length in the up-down direction Z between the upper end 52t of the first portion 52 and the lower end 52b of the first portion 52. The length Lz is larger than the length Kz. Therefore, it is easy to dispose the upper end 53t of the second portion 53 higher than the lower end 31b of the housing box 31.

The first portion 52 is long in the longitudinal direction X in vehicle side view. Therefore, it is easy to dispose the first portion 52 below the foot board 22.

The first portion 52 has a front end 52f. The second portion 53 has a front end 53f. The length Kx is a length in the longitudinal direction X between the front end 52f and the front end 53f. The length Kz is a length in the up-down direction Z between the lower end 52b and the upper end 52t. The length Kx is longer than the length Kz. Therefore, it is easy to dispose the first portion 52 below the foot board 22.

The first portion 52 has a right end 52c and a left end 52d. The length Ky is a length in the transverse direction Y between the right end 52c and the left end 52d. The length Ky is longer than the length Kz. Therefore, it is easy to dispose the first portion 52 below the foot board 22.

The first portion 52 is flat in the transverse direction Y. Therefore, it is easy to dispose the first portion 52 below the foot board 22.

The second portion 53 is long in the up-down direction Z in vehicle side view. Therefore, it is easy to dispose the upper end 53t of the second portion 53 higher than the lower end 31b of the housing box 31.

The second portion 53 has a front end 53f and a rear end 53r. The length Lx is a length in the longitudinal direction X between the front end 53f and the rear end 53r. The length Lz is a length in the up-down direction Z between the upper end 53t and the upper end 52t. The length Lz is longer than the length Lx. Therefore, it is easy to dispose the upper end 53t of the second portion 53 higher than the lower end 31b of the housing box 31.

The second portion 53 is joined to the rear part 32 of the first portion 52. Therefore, it is easy to dispose the first portion 52 below the foot board 22. It is easy to dispose the second portion 53 below the seat 21 and in front of the electric motor 41.

The battery 51 has a substantially L shape in vehicle side view. Therefore, it is easy to dispose the first portion 52 below the foot board 22. It is easy to dispose the second portion 53 below the seat 21 and in front of the electric motor 41.

The battery 51 has a center of gravity G. The center of gravity G is located lower than the lower end 31b of the housing box 31. Therefore, it is easy to lower a center of gravity of the straddled electric vehicle 1. Therefore, it is easy to improve the operability of the straddled electric vehicle 1.

The electric motor 41 has a motor shaft 43. The center of gravity G of the battery 51 is located lower than the motor shaft 43. Therefore, it is easier to lower the center of gravity of the straddled electric vehicle 1. Therefore, it is easier to improve the operability of the straddled electric vehicle 1.

The foot board 22 has an upper edge 22e in vehicle side view. The center of gravity G of the battery 51 is located lower than the upper edge 22e. Therefore, it is easier to lower the center of gravity of the straddled electric vehicle 1. Therefore, it is easier to improve the operability of the straddled electric vehicle 1.

The straddled electric vehicle 1 includes a drive shaft 44. The center of gravity G of the battery 51 is located lower than the drive shaft 44. Therefore, it is easier to lower the center of gravity of the straddled electric vehicle 1. Therefore, it is easier to improve the operability of the straddled electric vehicle 1.

The foot board 22 is flat in the transverse direction Y. Therefore, the space below the foot board 22 is not sufficiently large. However, the battery 51 includes a second portion 53 in addition to the first portion 52. Therefore, even if the foot board 22 is flat in the transverse direction Y, the size of the battery 51 is large. Therefore, even if the foot board 22 is flat in the transverse direction Y, the capacity of the battery 51 is large. Therefore, even if the foot board 22 is flat in the transverse direction Y, the straddled electric vehicle 1 mounts the battery 51 having a large capacity. Rather, when the foot board 22 is flat in the transverse direction Y, the straddled electric vehicle 1 exhibits significant utility.

The upper end 52t of the first portion 52 is disposed lower than the lower end 31b. Therefore, it is easy for the foot board 22 to be flat in the transverse direction Y.

The upper end 52t is disposed lower than at least a part of the motor shaft 43. Therefore, it is easy for the foot board 22 to be flat in the transverse direction Y.

The housing box 31 extends from a position more rearward than the second portion 53 to a position above the second portion 53. Thus, the housing box 31 has a relatively large size.

The housing box 31 includes a rear part 32 and a front part 33. The rear part 32 is disposed more rearward than the second portion 53. The front part 33 is disposed in front of the rear part 32. The front part 33 is disposed above the second portion 53. At least a part of the rear part 32 is disposed lower than the upper end 53t of the second portion 53. Thus, the rear part 32 has a relatively large size.

The entire front part 33 is disposed higher than the upper end 53t of the second portion 53. Therefore, the front part 33 does not interfere with the second portion 53. Therefore, it is easy to extend the housing box 31 from the position more rearward than the second portion 53 to the position above the second portion 53.

The foot board 22 has a right portion 23, a left portion 24, and a central portion 25. The left portion 24 is disposed leftward of the right portion 23. The central portion 25 is disposed leftward of the right portion 23 and rightward of the left portion 24. The right portion 23 has an upper edge 23e in vehicle side view. The left portion 24 has an upper edge 24e in vehicle side view. The first portion 52 is disposed below the upper edge 23e in vehicle side view. The first portion 52 is disposed below the upper edge 24e in vehicle side view. Therefore, it is easy to dispose the first portion 52 below the foot board 22.

The seat 21 has a front end 21f. At least a part of the first portion 52 is disposed more forward than the front end 21f. As described above, the first portion 52 is disposed below the foot board 22. Here, the battery 51 is a relatively heavy part. Therefore, the first portion 52 is relatively heavy, and at least a part of the first portion 52 is disposed more forward than the front end 21f and below the foot board 22. Therefore, it is easy to improve the comfort of the straddled electric vehicle 1. For example, it is easy to improve the stability of the straddled electric vehicle 1.

At least a part of the second portion 53 is disposed more rearward than the front end 21f. As described above, the second portion 53 extends upward from the first portion 52. Therefore, at least a part of the second portion 53 is disposed at a position close to the body of the driver of the straddled electric vehicle 1. Here, the battery 51 is a relatively heavy part. Therefore, the second portion 53 is relatively heavy, and at least a part of the second portion 53 is disposed more rearward than the front end 21f and extends upward from the first portion 52. In other words, the second portion 53 is relatively heavy, and at least a part of the second portion 53 is disposed at a position close to the driver. Therefore, it is easy to improve the comfort of the straddled electric vehicle 1. For example, it is easy to improve the drivability of the straddled electric vehicle 1.

At least a part of the first portion 52 overlaps the foot board 22 in vehicle plan view. Therefore, it is easy to dispose the first portion 52 below the foot board 22.

At least a part of the second portion 53 overlaps the seat 21 in vehicle plan view. Therefore, it is easy to dispose the second portion 53 below the seat 21.

### 9. Modifications

This invention is not limited to the embodiment described above, but may be modified as follows.

The shape of the first portion 52 may be changed. For example, in addition to extending forward from the second portion 53, the first portion 52 may extend rearward from the second portion 53. As a result, the battery 51 may have a substantially T shape in vehicle side view.

The shape of the second portion 53 may be changed. For example, the second portion 53 may extend in a curved line instead of a straight line. The second portion 53 may be curved upward from the first portion 52. The second portion 53 may be curved upward and rearward from the first portion 52. As a result, the battery 51 may have a substantially J shape in vehicle side view.

The arrangement of the first portion 52 may be changed as appropriate.

For example, a part of the first portion 52 is disposed lower than the foot board 22, and the other part of the first portion 52 is not disposed lower than the foot board 22.

For example, a part of the first portion 52 is disposed below the foot board 22, and the other part of the first portion 52 is not disposed below the foot board 22.

For example, a part of the first portion 52 overlaps the foot board 22 in vehicle plan view, and the other part of the first portion 52 does not overlap the foot board 22 in vehicle plan view.

For example, at least a part of the first portion 52 overlaps the foot board 22 in vehicle side view. For example, the entire first portion 52 overlaps the foot board 22 in vehicle side view.

For example, at least a part of the first portion 52 is disposed higher than the upper edge 23e of the right portion 23 in vehicle side view.

For example, at least a part of the first portion 52 is disposed above the upper edge 23e in vehicle side view.

For example, the first portion 52 overlaps the upper edge 23e in vehicle side view.

For example, at least a part of the first portion 52 is disposed higher than the upper edge 24e of the left portion 24 in vehicle side view.

For example, at least a part of the first portion 52 is disposed above the upper edge 24e in vehicle side view.

For example, the first portion 52 overlaps the upper edge 24e in vehicle side view.

For example, the entire first portion 52 is disposed more forward than the entire seat 21. For example, the entire first portion 52 is disposed more forward than the front end 21f of the seat 21.

For example, the first portion 52 does not overlap the seat 21 in vehicle plan view.

The arrangement of the second portion 53 may be changed as appropriate.

For example, at least a part of the second portion 53 is disposed lower than the foot board 22.

For example, the entire second portion 53 is disposed lower than the foot board 22.

For example, at least a part of the second portion 53 is disposed below the foot board 22.

For example, the entire second portion 53 is disposed below the foot board 22.

For example, at least a part of the second portion 52 overlaps the foot board 22 in vehicle plan view. For example, the entire second portion 52 overlaps the foot board 22 in vehicle plan view.

For example, at least a part of the second portion 53 overlaps the foot board 22 in vehicle side view. For example, the entire second portion 53 overlaps the foot board 22 in vehicle side view.

Alternatively, the second portion 53 does not overlap the foot board 22 in vehicle side view.

For example, at least a part of the second portion 52 is disposed lower than the upper edge 22e of the foot board 22 in vehicle side view. For example, the entire second portion 52 is disposed lower than the upper edge 22e in vehicle side view. For example, the upper end 53t of the second portion 53 is disposed lower than the upper edge 22e in vehicle side view.

For example, at least a part of the second portion 52 is disposed below the upper edge 22e in vehicle side view. For example, the entire second portion 52 is disposed below the upper edge 22e in vehicle side view. For example, the upper end 53t of the second portion 53 is disposed below the upper edge 22e in vehicle side view.

For example, the second portion 53 does not overlap the upper edge 22e in vehicle side view.

For example, at least a part of the second portion 52 is disposed higher than the upper edge 23e of the right portion 23 in vehicle side view.

For example, at least a part of the second portion 52 is disposed above the upper edge 23e in vehicle side view.

For example, the second portion 52 does not overlap the upper edge 23e in vehicle side view.

For example, at least a part of the second portion 52 is disposed higher than the upper edge 24e of the left portion 24 in vehicle side view.

For example, at least a part of the second portion 52 is disposed above the upper edge 24e in vehicle side view.

For example, the second portion 52 does not overlap the upper edge 24e in vehicle side view.

For example, at least a part of the second portion 52 is disposed lower than the upper edge 25e of the central portion 25 in vehicle side view. For example, the entire second portion 52 is disposed lower than the upper edge 25e in vehicle side view. For example, the upper end 53t of the second portion 53 is disposed lower than the upper edge 22e in vehicle side view.

For example, at least a part of the second portion 52 is disposed below the upper edge 25e in vehicle side view. For example, the entire second portion 52 is disposed below the upper edge 25e in vehicle side view. For example, the upper end 53t of the second portion 53 is disposed below the upper edge 22e in vehicle side view.

For example, the second portion 53 does not overlap the upper edge 25e in vehicle side view.

For example, a part of the second portion 53 is disposed below the seat 21 and the other part of the second portion 53 is not disposed below the seat 21. A part of the second portion 53 is disposed more rearward than the front end 21f of the seat 21, and the other part of the second portion 53 is disposed more forward than the front end 21f of the seat 21.

Alternatively, the entire second portion 53 is not disposed below the seat 21. The entire second portion 53 is disposed more forward than the front end 21f of the seat 21.

For example, a part of the second portion 53 overlaps the seat 21 in vehicle plan view, and the other part of the second portion 53 does not overlap the seat 21 in vehicle plan view.

Alternatively, the second portion 53 does not overlap the seat 21 in vehicle plan view.

The attitude of the first cells 55a may be changed. The attitude of the second cells 55b may be changed.

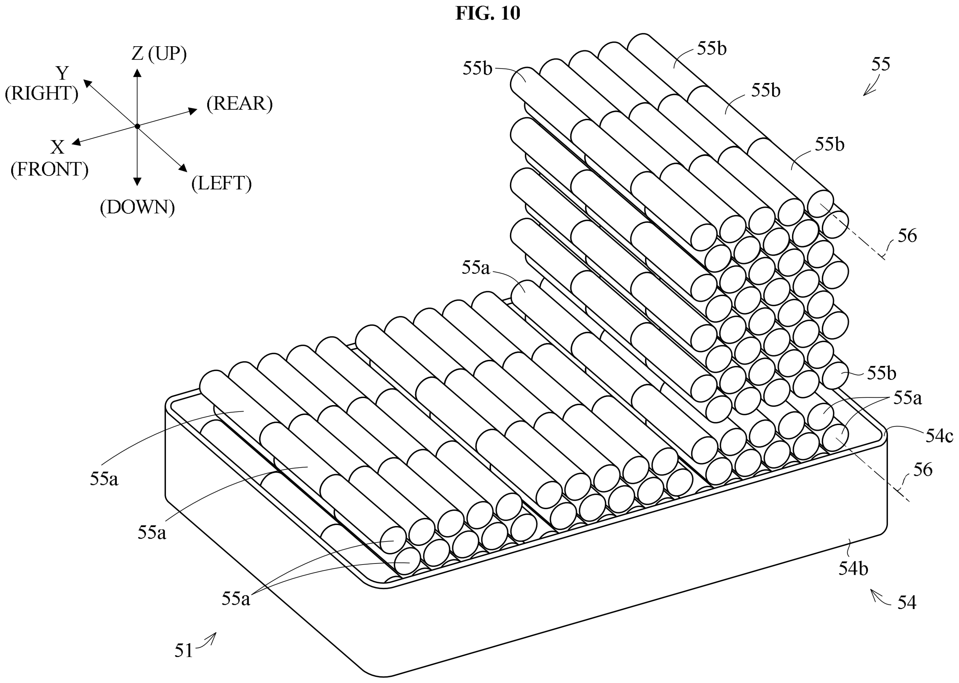

Fig 10 is a perspective view of a battery 51 according to a modification. In the present modification, the first cells 55a are installed in a horizontal attitude. Specifically, each axis 56 of the first cells 55a extends in the horizontal direction. Each first cell 55a is installed such that the axis 56 extends in the horizontal direction. Each axis 56 of the first cells 55a extends in the transverse direction Y. Each first cell 55a is installed such that the axis 56 extends in the transverse direction Y. The attitude of the second cells 55b is common to the attitude of the first cells 55a. The second cells 55b are installed in a horizontal attitude. Specifically, each axis 56 of the second cells 55b extends in the horizontal direction. Each of the second cells 55b is installed such that the axis 56 extends in the horizontal direction. Each axis 56 of the second cells 55b extends in the transverse direction Y. Each of the second cells 55b is installed such that the axis 56 extends in the transverse direction Y.

The attitude of the second cells 55b is not limited to be common to the attitude of the first cells 55a. The attitude of the second cells 55b may be different from the attitude of the first cells 55a.

The arrangement of the plurality of first cells 55a may be changed. The arrangement of the plurality of second cells 55b may be changed.

In the modification shown in Fig. 10, the arrangement of the plurality of first cells 55a is as follows. The first cells 55a are arranged in the longitudinal direction X, the transverse direction Y, and the up-down direction Z. For example, the first cells 55a are arranged in fifteen columns in the longitudinal direction X. The first cells 55a are arranged in three columns in the transverse direction Y. The first cells 55a are arranged in five columns in the up-down direction Z.

In the modification shown in Fig. 10, the arrangement of the plurality of second cells 55b is as follows. The second cells 55b are arranged in the longitudinal direction X, the transverse direction Y, and the up-down direction Z. For example, the second cells 55b are arranged in five columns in the longitudinal direction X. The second cells 55b are arranged in three columns in the transverse direction Y. The second cells 55b are arranged in eight columns in the up-down direction Z.

The disposing location of the drive shaft 44 may be changed. For example, the drive shaft 44 may be disposed lower than the motor shaft 43. As a result, the drive shaft 44 may be disposed lower than the center of gravity G of the battery 51. In other words, the center of gravity G of the battery 51 may be located higher than the drive shaft 44.

The disposing location of the joint surface 54c may be changed. For example, the joint surface 54c may be disposed at a boundary between the first portion 52 and the second portion 53. The joint surface 54c may be disposed on the virtual plane Q.

The shape of the housing box 31 may be changed. For example, the housing box 31 may not include the front part 33. The housing box 31 may be configured only by the rear part 32. The rear part 32 may include a front end 31f of the housing box 31. The front end 31f of the housing box 31 may be disposed on the virtual plane P. As a result, the front end 31f of the housing box 31 may be disposed more rearward than the entire battery 51. In other words, the entire battery 51 may be disposed more forward than the front end 31f of the housing box 31. The entire first portion 52 may be disposed more forward than the front end 31f. The entire second portion 53 may be disposed more forward than the front end 31f. The rear end 53r of the second portion 53 may be disposed more forward than the front end 31f. The entire first cells 55a may be disposed more forward than the front end 31f. The entire second cells 55b may be disposed more forward than the front end 31f. The entire electric component 57 may be disposed more forward than the front end 31f.

The disposing location of the electric motor 41 may be changed. In one modification, the electric motor 41 is for example supported on a swing arm 27. The electric motor 41 overlaps the swing arm 27 in vehicle side view. The electric motor 41 swings with respect to the vehicle body frame 11. In another modification, the electric motor 41 is mounted on the rear axle 28, for example. The electric motor 41 overlaps the rear axle 28 in vehicle side view. The electric motor 41 swings with respect to the vehicle body frame 11. The motor shaft 43 is coaxial with the rear axle 28, for example.

The shape of the foot board 22 may be changed. For example, the foot board 22 may not be flat in the transverse direction Y. For example, the foot board 22 may include a center tunnel.

For example, the central portion 25 may be higher than the right portion 23. The central portion 25 may protrude upward with respect to the right portion 23. The central portion 25 may extend leftward and upward from the right portion 23. The central portion 25 may be higher than the left portion 24. The central portion 25 may protrude upward with respect to the left portion 24. The central portion 25 may extend rightward and upward from the left portion 24. The central portion 25 may be convexly curved upward in a cross section perpendicular to the longitudinal direction X.

For example, the upper edge 25e of the central portion 25 may be disposed higher than the upper edge 23e of the right portion 23 in vehicle side view. The upper edge 25e of the central portion 25 may be disposed higher than the upper edge 24e of the left portion 24 in vehicle side view. The upper edge 23e may not correspond to the upper edge 22e of the foot board 22 in vehicle side view. The upper edge 24e may not correspond to the upper edge 22e in vehicle side view. The upper edge 25e may correspond to the upper edge 22e in vehicle side view.

Also in the modification related to the foot board 22 described above, the arrangement of the first portion 52 may be appropriately selected and changed. The arrangement of the first portion 52 is illustrated in the above-described embodiment and modification.

In the modification related to the foot board 22 described above, the arrangement of the first portion 52 exemplified in the embodiment will be specifically described.

Also in the modification relating to the foot board 22 described above, the first portion 52 is disposed below the foot board 22. The first portion 52 is disposed lower than the foot board 22. At least a part of the first portion 52 overlaps the foot board 22 in vehicle plan view. The first portion 52 is disposed below the upper edge 22e in vehicle side view.

For example, the first portion 52 is disposed below the upper edge 23e in vehicle side view. The first portion 52 is disposed below the upper edge 24e in vehicle side view. Therefore, regardless of the shape of the foot board 22, it is easy to dispose the first portion 52 below the foot board 22. For example, even when the foot board 22 includes a center tunnel, it is easy to dispose the first portion 52 below the foot board 22.

For example, the first portion 52 is disposed below the upper edge 25e in vehicle side view. The first portion 52 does not overlap the central portion 25 in vehicle side view. Therefore, it is easy to dispose the first portion 52 below the upper edge 23e in vehicle side view. It is easy to dispose the first portion 52 below the upper edge 24e in vehicle side view.

Also in the modification related to the foot board 22 described above, the arrangement of the second portion 53 may be appropriately selected and changed. The arrangement of the second portion 53 is illustrated in the above-described embodiment and modification.

The number of front wheels 5 is not limited to one. The number of front wheels 5 may be two. The number of rear wheels 29 is not limited to one. The number of rear wheels 29 may be two.

### Reference Signs List

1: Straddled electric vehicle
11: Vehicle body frame
21: Seat
21f: Front end of the seat
22: Foot board
22e: Upper edge of foot board
23: Right portion
23e: upper edge of right portion in side view of straddled electric vehicle
24: Left portion
24e: upper edge of left portion in side view of straddled electric vehicle
25: Central portion
31: Housing box
31b: Lower end of housing box
32: Rear part
33: Front part
41: Electric motor
41t: Upper end of electric motor
43: Motor shaft
44: Drive shaft
51: Battery
52: First portion
52t: Upper end of first portion
52b: Lower end of first portion
53: Second portion
53t: Upper end of second portion
55a: First cell
55b: Second cell
G: Center of gravity of battery
Kz: Length in up-down direction between upper end of first portion and lower end of first portion
Lz: Length in up-down direction between upper end of second portion and upper end of first portion
X: Longitudinal direction
Y: Transverse direction
Z: Up-down direction

## Claims

1. A straddled electric vehicle comprising:
a vehicle body frame;
a seat;
a foot board at least a part of which is disposed more forward than and lower than the seat;
a housing box supported by the vehicle body frame and installed below the seat;
an electric motor disposed below the housing box and overlapping the housing box in plan view of the straddled electric vehicle; and
a battery configured to supply electric power to the electric motor,
wherein the battery includes:
a first portion disposed below the foot board; and
a second portion extending upward from the first portion and disposed below the seat and in front of the electric motor, and
the second portion has an upper end disposed higher than a lower end of the housing box.

2. The straddled electric vehicle according to claim 1, wherein the second portion overlaps the housing box in front view of the straddled electric vehicle.

3. The straddled electric vehicle according to claim 1 or 2, wherein
the battery includes:
a plurality of first cells installed in the first portion; and
a plurality of second cells installed in the second portion, and
the second cells include a portion disposed higher than the lower end of the housing box.

4. The straddled electric vehicle according to claim 1 or 2, wherein the upper end of the second portion is disposed higher than at least a part, preferably the entirety, of the electric motor.

5. The straddled electric vehicle according to claim 1 or 2, wherein the upper end of the second portion is disposed higher than at least a part, preferably the entirety, of the foot board.

6. The straddled electric vehicle according to claim 1 or 2, wherein
the first portion has an upper end and a lower end, and
a length in an up-down direction of the straddled electric vehicle between the upper end of the second portion and the upper end of the first portion is larger than a length in the up-down direction of the straddled electric vehicle between the upper end of the first portion and the lower end of the first portion.

7. The straddled electric vehicle according to claim 1 or 2, wherein
the first portion is longer in a longitudinal direction of the straddled electric vehicle than in an up-down-direction in side view of the straddled electric vehicle, and
the second portion is longer in the up-down direction of the straddled electric vehicle than in the longitudinal direction in side view of the straddled electric vehicle.

8. The straddled electric vehicle according to claim 1 or 2, wherein the second portion is joined to a rear part of the first portion.

9. The straddled electric vehicle according to claim 1 or 2, wherein the battery has a substantially L shape in side view of the straddled electric vehicle.

10. The straddled electric vehicle according to claim 1 or 2, wherein the battery has a center of gravity located lower than the lower end of the housing box.

11. The straddled electric vehicle according to claim 10, wherein
the electric motor includes a motor shaft, and
the center of gravity of the battery is located lower than the motor shaft.

12. The straddled electric vehicle according to claim 10, wherein
the foot board has an upper edge in side view of the straddled electric vehicle, and
the center of gravity of the battery is located lower than at least a part, preferably the entirety, of the upper edge of the foot board.

13. The straddled electric vehicle according to claim 1 or 2, wherein the foot board is flat in a transverse direction of the straddled electric vehicle.

14. The straddled electric vehicle according to claim 1 or 2, wherein the housing box extends from a position more rearward than the second portion to a position above the second portion.

15. The straddled electric vehicle according to claim 14, wherein
the housing box includes:
a rear part disposed more rearward than the second portion; and
a front part disposed in front of the rear part and disposed above the second portion,
at least a part of the rear part is disposed lower than the upper end of the second portion, and
the entire front part is disposed higher than the upper end of the second portion.

16. The straddled electric vehicle according to claim 1 or 2, wherein
the foot board includes,
a right portion,
a left portion disposed leftward of the right portion; and
a central portion disposed leftward of the right portion and rightward of the left portion,
the right portion has an upper edge in side view of the straddled electric vehicle,
the left portion has an upper edge in side view of the straddled electric vehicle,
the first portion is disposed below the upper edge of the right portion in side view of the straddled electric vehicle, and
the first portion is disposed below the upper edge of the left portion in side view of the straddled electric vehicle.

17. The straddled electric vehicle according to claim 1 or 2, wherein
the seat has a front end,
at least a part of the first portion is disposed more forward than the front end of the seat, and
at least a part of the second portion is disposed more rearward than the front end of the seat.

18. The straddled electric vehicle according to claim 1 or 2, wherein
at least a part of the first portion overlaps the foot board in plan view of the straddled electric vehicle, and
at least a part of the second portion overlaps the seat in plan view of the straddled electric vehicle.
